# EUROPEAN PATENT APPLICATION

(11) **EP 4 398 086 A1**
(43) Date of publication of application: **10.07.2024**
(21) Application number: 23219994.3
(22) Date of filing: 22.12.2023
(51) Int. Cl.: G06F 3/12

(54) **APPARATUS, AUTHENTICATION SYSTEM, AUTHENTICATION METHOD, AND CARRIER MEANS**

(30) Priority: 06.01.2023 JP 2023001296
(71) Applicant: Ricoh Company, Ltd., Tokyo 143-8555 (JP)
(72) Inventor: Okutsu, Akito, Tokyo, 143-8555 (JP); Kitamura, Takashi, Tokyo, 143-8555 (JP)
(74) Representative: Marks & Clerk LLP

(57) **Abstract**

An apparatus (40) communicably connected with a terminal apparatus (10) and an information processing system (20), comprising: an operation receiving unit (42b) configured to receive input of authentication information of a user; a conversion unit (46) configured to convert the authentication information input by the user into an authentication image based on a success of authentication using the authentication information of the user; a display control unit (42a) configured to display the authentication image that is converted at the terminal apparatus (10); an authentication information acquisition unit (41) configured to acquire the authentication information of the user from the authentication image displayed at the terminal apparatus (10); a data acquisition unit (45) configured to acquire, from the information processing system (20), data associated with identification information of the user who is authenticated using the acquired authentication information; and a data processing unit (47) configured to process the data that is acquired.

## Description

### BACKGROUND

### Technical Field

The present disclosure relates to an apparatus, an authentication system, an authentication method, and carrier means.

### Related Art

In a pull printing service of the related art, a user operates a terminal apparatus to store a print job in an information processing system on a network via the terminal apparatus, downloads the print job in the information processing system via an apparatus such as an image forming apparatus, and performs printing based on the print job. In the pull printing service, the apparatus performs authentication of the user to perform printing based on the print job registered by the user.

An authentication method of the related art uses an authentication image such as a Quick Response (QR) code^{®}. For example, Japanese Unexamined Patent Application Publication No. 2017-097564 discloses a technique in which a terminal apparatus displays an authentication image, and an image forming apparatus reads the authentication image, authenticates the terminal apparatus, and permits execution of a process in the image forming apparatus.

In the technique of the related art, however, a dedicated application for processing data using the apparatus is to be installed in the terminal apparatus. That is, in order for the terminal apparatus to display the authentication image including authentication information of the user, an application for converting the authentication information into the authentication image is to be used. Therefore, the user prepares the dedicated application when the user performs printing with the image forming apparatus. A service provider that provides such a printing service manages and operates the application. For example, it is burdensome for the user to prepare an additional application when the user performs printing with an image forming apparatus in a store. This discourages the user from using the image forming apparatus.

### SUMMARY

According to an embodiment of the present disclosure, an apparatus is communicably connected with a terminal apparatus and an information processing system. The apparatus includes: an operation receiving unit configured to receive input of authentication information of a user; a conversion unit configured to convert the authentication information input by the user into an authentication image based on a success of authentication using the authentication information of the user; a display control unit configured to display the authentication image that is converted at the terminal apparatus; an authentication information acquisition unit configured to acquire the authentication information of the user from the authentication image displayed at the terminal apparatus; a data acquisition unit configured to acquire, from the information processing system, data associated with identification information of the user who is authenticated using the acquired authentication information; and a data processing unit configured to process the data that is acquired.

According to another embodiment of the present disclosure, an authentication system includes the above-described apparatus, and an information processing system. The information processing system communicates with the apparatus and stores the data to be processed by the apparatus in a job management unit.

According to another embodiment of the present disclosure, an authentication method is performed by an apparatus that processes data registered in an information processing system. The authentication method includes: receiving input of authentication information of a user; converting the authentication information input by the user into an authentication image based on a success of authentication using the authentication information of the user; displaying the authentication image that is converted at a terminal apparatus; acquiring the authentication information of the user from the authentication image displayed at the terminal apparatus; acquiring, from an information processing system, data associated with identification information of the user who is authenticated using the acquired authentication information; and processing the data that is acquired.

According to another embodiment of the present disclosure, carrier means carries computer readable code for controlling a computer system to carry out the above-described authentication method.

With the above-described apparatus, installation of a dedicated application on a terminal apparatus is not necessary to process data.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a diagram for describing an overview of an authentication method performed by an authentication system in pull printing;
FIG. 2 is an example of a system configuration diagram of the authentication system;
FIG. 3 is an example of a hardware configuration diagram of a terminal apparatus;
FIG. 4 is an example of a hardware configuration diagram of an information processing system;
FIG. 5 is an example of a hardware configuration diagram of an image forming apparatus;
FIG. 6 is a diagram for describing an overview of functions of the terminal apparatus, the image forming apparatus, and the information processing system and relationships between the functions;
FIG. 7 is an example of a functional block diagram for describing, as individual blocks, functions of the terminal apparatus, the information processing system, and the image forming apparatus of the authentication system;
FIG. 8 is a table schematically illustrating an example of user information managed by a user management unit;
FIG. 9 is a table schematically illustrating print job information managed by a job management unit;
FIG. 10 is an example of a diagram illustrating a transition of screens displayed by the image forming apparatus when a user logs into the information processing system via the image forming apparatus;
FIG. 11 is a diagram illustrating an example of a consent screen displayed by the image forming apparatus;
FIG. 12 is a diagram illustrating an example of a login method selection screen displayed by the image forming apparatus;
FIG. 13 is a diagram illustrating an example of a login information input screen displayed by the image forming apparatus;
FIG. 14 is a diagram illustrating an example of an authentication image reading screen displayed by the image forming apparatus;
FIG. 15 is a diagram illustrating an example of a processing screen displayed by the image forming apparatus;
FIG. 16 is an example of a diagram illustrating, as a variation of FIG. 10, a transition of screens displayed by the image forming apparatus when a user logs into the information processing system via the image forming apparatus;
FIG. 17 is a diagram illustrating an example of a login information input screen displayed by the image forming apparatus;
FIG. 18 is an example of a diagram illustrating a transition of screens on which a user selects a print job from a print job list displayed on the image forming apparatus and causes the image forming apparatus to perform printing;
FIG. 19 is a diagram illustrating an example of a document selection screen displayed by the image forming apparatus;
FIG. 20 is a diagram illustrating an example of an authentication image display screen displayed by the image forming apparatus;
FIG. 21 is a diagram illustrating an example of a print setting screen displayed by the image forming apparatus;
FIG. 22 is an example of a sequence diagram for describing a process in which a user operates the terminal apparatus to store a print job in the information processing system;
FIG. 23 is an example of a sequence diagram for describing a process in which the user operates the image forming apparatus to log into the information processing system at first pull printing;
FIG. 24 is an example of a sequence diagram for describing a process in which the user presents the authentication image to the image forming apparatus to log into the information processing system;
FIG. 25 is an example of a sequence diagram for describing a process in which the image forming apparatus executes the print job after the authentication success;
FIG. 26 is an example of a sequence diagram for describing a process in which the user logs into the information processing system via the image forming apparatus in the case where the image forming apparatus encrypts and decrypts authentication information;
FIG. 27 is an example of a sequence diagram for describing a process performed by the authentication system in the case where the user switches the login method on the login method selection screen; and
FIG. 28 is an example of a functional block diagram in the case where the image forming apparatus executes a web application (app).

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An authentication system and an authentication method performed by the authentication system will be described below one or more embodiments of the present disclosure with reference to the drawings.

### Overview of Authentication Method

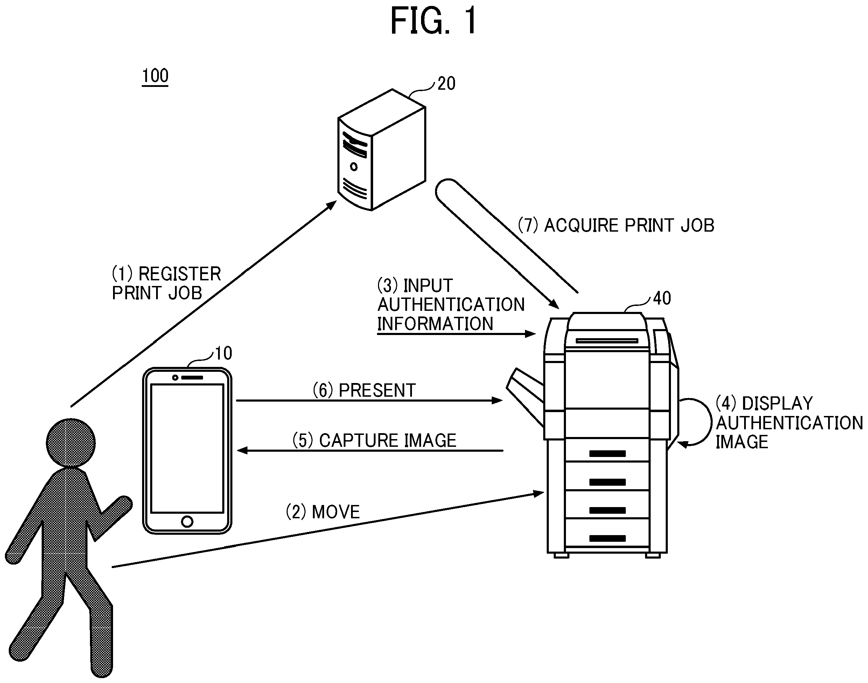

FIG. 1 is a diagram for describing an overview of an authentication method performed by an authentication system 100 in pull printing.
(1) A user who desires to print a file using an image forming apparatus 40 registers a print job for printing the file in an information processing system 20 on the network in advance. The information processing system 20 is, for example, a cloud server.
(2) The user visits the image forming apparatus 40 at a public place (such as a convenience store or university campus store), for example.
(3) At the first pull printing, the user inputs, via an operation panel of the image forming apparatus 40, authentication information (such as an email address and a password) registered in the information processing system 20 at registration of the print job. The image forming apparatus 40 transmits the authentication information to the information processing system 20. If authentication performed by the information processing system 20 is successful, the image forming apparatus 40 acquires the print job from the information processing system 20 and performs printing based on the print job.
(4) When the authentication is successful, the image forming apparatus 40 converts the authentication information into an authentication image such as a QR code^{®} and displays the authentication image.
(5) The user captures the authentication image with a camera of a terminal apparatus 10 and stores image data of the authentication image.
(6) When the user performs printing based on the print job at second or subsequent pull printing, the user causes the terminal apparatus 10 to display the authentication image based on the image data and causes the image forming apparatus 40 to read the authentication image.
(7) The image forming apparatus 40 acquires the authentication information from the authentication image and transmits the authentication information to the information processing system 20 to perform authentication of the user. The image forming apparatus 40 acquires the print job registered by the user and performs printing based on the print job.

Thus, the authentication system 100 according to the present embodiment can implement easy authentication and easy printing based on the print job in response to the user presenting a photograph of the authentication image. The user may skip input of the authentication information at each printing. Since the terminal apparatus 10 at least including a camera function is used, installation of a dedicated application for printing by the user is omitted.

Unlike the related art, since determination of a distance to the information processing system 20 and display control related to a determination result are no longer to be performed in the terminal of the user, the dedicated application for performing control is not to be used.

### Terminology

Pull printing is a service in which a user stores a print job in an information processing system on a network via a terminal apparatus operated by the user, downloads the print job in the information processing system via an apparatus such as an image forming apparatus, and performs printing based on the print job. Pull printing is also referred to as location-free printing, secure printing, or the like.

A print job is a process serving as a unit of execution when the image forming apparatus 40 prints document data requested to be printed. The print job includes at least document data and may further include a print setting. A job of the image forming apparatus 40 is referred to as a print job. In another apparatus, a job having a name corresponding to a function of the another apparatus is executed. The document data may include an image and a figure as well as text or may include an image alone.

In this disclosure, authentication refers to verifying who a user is. The authentication may further refer to determining whether the authenticated user is an authorized person. Authentication information is information that is input to an apparatus by a user at authentication and is used for authentication by the apparatus or the information processing system.
In the present embodiment, the authentication information is, for example, an email address (user ID) and a password. If authentication is successful, the user logs into the image forming apparatus 40. Login refers to an act of accessing a resource of a system using account information registered in advance when using various services on a computer or the Internet. The authentication information may be an integrated circuit (IC) card number, biometrics information, or the like in addition to a user ID and a password.

An authentication image is an image into which authentication information which is a character string is converted. The authentication image has a function of allowing an image-capturing device to easily and quickly detect a position, a size, and a tilt of the authentication image, a function of representing original data by a size and an arrangement of black and white squares and lines, and an error correcting function of reproducing the data even if the authentication image has an unreadable portion due to a stain. The image-capturing device can acquire the authentication information more accurately and more quickly than reading the character string.

Processing of data refer to processing data using a function of the apparatus. In the present embodiment, processing of data is, for example, execution of a print job, scanning, copying, email transmission, scan to folder (executing scanning of a document image and requesting storage of scan data in a predetermined storage area), or reproduction of a print setting or reading setting (such as a color setting, a resolution, a density, or a transmission destination folder).

### Example of System Configuration

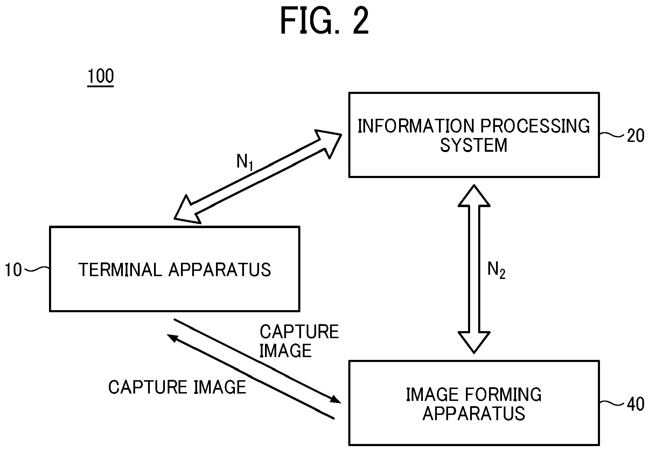

FIG. 2 is an example of a system configuration diagram of the authentication system 100 according to the present embodiment. The authentication system 100 includes the terminal apparatus 10, the information processing system 20, and the image forming apparatus 40.

The terminal apparatus 10 and the information processing system 20 communicate with each other via a network N₁. In the present embodiment, the network N₁ is a network using a public line of 3rd generation (3G), 4th generation (4G), 5th generation (5G), Long Term Evolution (LTE), or the like. The public line is a communication line that connects sites to one another and is used by unspecified users who physically share the same line. Examples of the public line include a mobile phone network and a personal handy-phone system (PHS) communication network. The terminal apparatus 10 can be connected to an access point via a wireless local area network (LAN) such as Wireless Fidelity (Wi-Fi^{®}) to communicate with the information processing system 20 via the Internet or may communicate with the information processing system 20 through a cable.

The image forming apparatus 40 and the information processing system 20 communicate with each other via a network N₂. In the present embodiment, the network N₂ may be a LAN built at a facility or the like where the image forming apparatus 40 and the information processing system 20 are installed, a wide area network (WAN) including a plurality of LANs, the Internet, or the like. The network N₂ allows the image forming apparatus 40 and the information processing system 20 to communicate with each other. The network N₂ may be built in a wired or wireless manner, or in a combination of wired and wireless manners. The image forming apparatus 40 may be connected to a public line to communicate with the information processing system 20.

In the present embodiment, the terminal apparatus 10 and the image forming apparatus 40 may not communicate with each other via a network. The terminal apparatus 10 and the image forming apparatus 40 use image-capturing functions thereof to capture the authentication image displayed by the other. Note that the terminal apparatus 10 and the image forming apparatus 40 may communicate with each other via a network. This network is, for example, a network using short-range wireless communication such as Near Field Communication (NFC) or Bluetooth^{®} (including Bluetooth Low Energy). In addition, the network is preferably for communication in a relatively short range such as infrared communication or visible light communication.

The terminal apparatus 10 has functions of a computer and has a function (for example, a web browser) of registering a print job and authentication information in the information processing system 20 and acquiring and displaying a print job list. The terminal apparatus 10 may have a function of editing or deleting a print job. General-purpose applications for a function of capturing an authentication image, for assisting creation of document data, and for acquiring document data from the Internet operate in the terminal apparatus 10. The terminal apparatus 10 does not use a dedicated application for causing the image forming apparatus 40 to perform printing based on a print job stored in the information processing system 20.

Specifically, the terminal apparatus 10 is, but not limited to, a smartphone, a mobile phone, a tablet terminal, a game machine, a personal digital assistant (PDA), a digital camera, a wearable personal computer (PC) of a wrist watch type or the like, or a PC.

An apparatus other than the terminal apparatus 10 may register a print job and authentication information.
That is, any PC or the like that communicates with the information processing system 20 can register a print job and authentication information in the information processing system 20.

The information processing system 20 is, for example, one or more information processing apparatuses on the Internet.
The information processing system 20 on the network may be referred to as a server. The server is a computer or software having a function of providing information or a processing result in response to a request from a client. The information processing system 20 may support cloud computing. Cloud computing refers to the availability of resources on a network without any awareness of specific hardware resources.

The information processing system 20 receives registration of authentication information transmitted from the terminal apparatus 10 and stores a print job. The information processing system 20 also performs authentication of a user in response to a request from the image forming apparatus 40, and transmits a print job to the image forming apparatus 40 if the authentication is successful. The information processing system 20 may exist on the Internet or may exist on premise. The information processing system 20 may be referred to as a cloud server, a server system, or the like.

The information processing system 20 includes a storage for storing a print job. This storage may be a storage used in a service that provides users with a disk space on the Internet. The storage for storing a print job may be referred to as an online storage (that is free or charged). The information processing system 20 is available to both general users and companies. The use of the information processing system 20 saves the companies an effort to build a file server environment by themselves and allows the companies to increase or decrease the capacity according to their need.

The image forming apparatus 40 is an example of an apparatus. The image forming apparatus 40 is a printer, a printing apparatus, an image processing apparatus, a copier, a multi-function peripheral/product/printer (MFP), or the like that executes a print job. In the present embodiment, the image forming apparatus 40 has at least a printer function.

The image forming apparatus 40 may be an apparatus having a function of outputting data other than the printer function. The image forming apparatus 40 is, for example, a projector, a head-up display (HUD) device, an electronic whiteboard, a digital signage, or the like. In the case of these devices, the image forming apparatus 40 outputs (displays, reproduces, or the like) data of a video, a document, and music acquired from the information processing system 20.

The image forming apparatus 40 is not limited to a printer and may be any apparatus having a communication function. The image forming apparatus 40 may be, for example, an industrial machine, an image-capturing apparatus, a sound collecting apparatus, a medical device, a network home appliance, a connected car, a notebook PC, a mobile phone, a smartphone, a tablet terminal, a game machine, a PDA, a digital camera, a wearable PC, or a desktop PC.

### Hardware Configuration

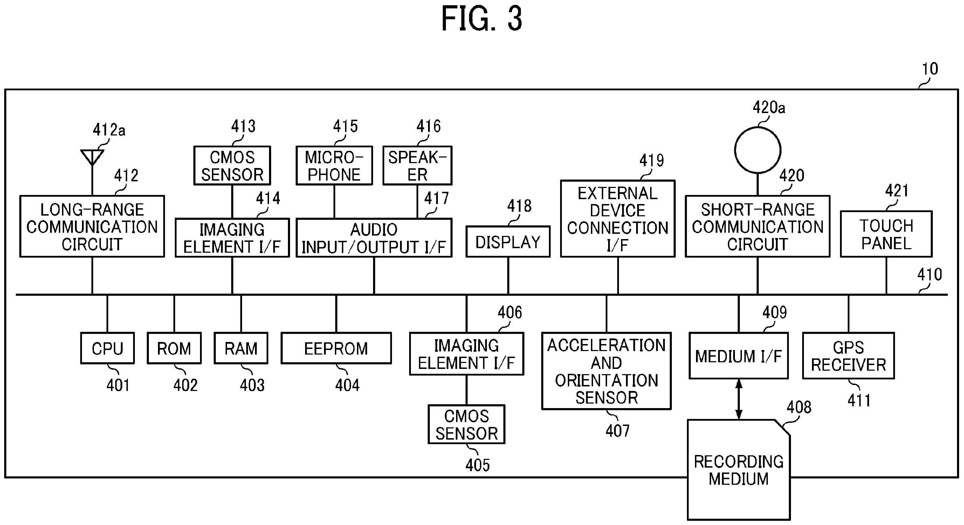

A hardware configuration of the authentication system 100 will be described with reference to FIGs. 3 to 5.

### Terminal Apparatus

FIG. 3 is a hardware configuration diagram of the terminal apparatus 10. As illustrated in FIG. 3, the terminal apparatus 10 includes a central processing unit (CPU) 401, a read-only memory (ROM) 402, a random access memory (RAM) 403, an electrically erasable and programmable ROM (EEPROM) 404, a complementary metal oxide semiconductor (CMOS) sensor 405, an imaging element interface (I/F) 406, an acceleration and orientation sensor 407, a medium I/F 409, and a global positioning system (GPS) receiver 411.

The CPU 401 controls operations of the entire terminal apparatus 10. The ROM 402 stores a program such as an initial program loader (IPL) used for driving the CPU 401. The RAM 403 is used as a work area for the CPU 401. The EEPROM 404 reads or writes various kinds of data such as a program for the terminal apparatus 10 under control of the CPU 401. The CMOS sensor 405 is an example of a built-in imaging means that captures an image of a subject (mainly a self-image) under control of the CPU 401 to obtain image data. Note that an alternative to the CMOS sensor 405 may be an imaging means such as a charge-coupled device (CCD) sensor. The imaging element I/F 406 is a circuit that controls driving of the CMOS sensor 405. The acceleration and orientation sensor 407 is any of various sensors such as an electromagnetic compass or gyrocompass that detects geomagnetism or an acceleration sensor. The medium I/F 409 controls reading or writing (storing) of data from or to a recording medium 408 such as a flash memory. The GPS receiver 411 receives a GPS signal from a GPS satellite.

The terminal apparatus 10 further includes a long-range communication circuit 412, an antenna 412a for the long-range communication circuit 412, a CMOS sensor 413, an imaging element I/F 414, a microphone 415, a speaker 416, an audio input/output I/F 417, a display 418, an external device connection I/F 419, a short-range communication circuit 420, an antenna 420a for the short-range communication circuit 420, and a touch panel 421.

The long-range communication circuit 412 is a circuit that communicates with other devices via the network N₁. The CMOS sensor 413 is an example of a built-in imaging means that captures a subject under control of the CPU 401 to obtain image data. The imaging element I/F 414 is a circuit that controls driving of the CMOS sensor 413. The microphone 415 is a built-in circuit that converts sound into an electric signal. The speaker 416 is a built-in circuit that generates sound such as music or voice by converting an electric signal into physical vibration. The audio input/output I/F 417 is a circuit that inputs and outputs an audio signal between the microphone 415 and the speaker 416 under control of the CPU 401. The display 418 is an example of a display means that displays an image of the subject, various icons, etc. Examples of the display 418 include a liquid crystal display (LCD) and an organic electroluminescence (EL) display. The external device connection I/F 419 is an interface that connects various external devices to the terminal apparatus 10. The short-range communication circuit 420 is a communication circuit that is compliant with NFC, Bluetooth^{®}, or the like. The touch panel 421 is an example of an input means that allows a user to operate the terminal apparatus 10 by touching the display 418.

The terminal apparatus 10 further includes a bus line 410. The bus line 410 is, for example, an address bus or a data bus for electrically connecting the components such as the CPU 401 illustrated in FIG. 3 to one another.

### Information Processing System

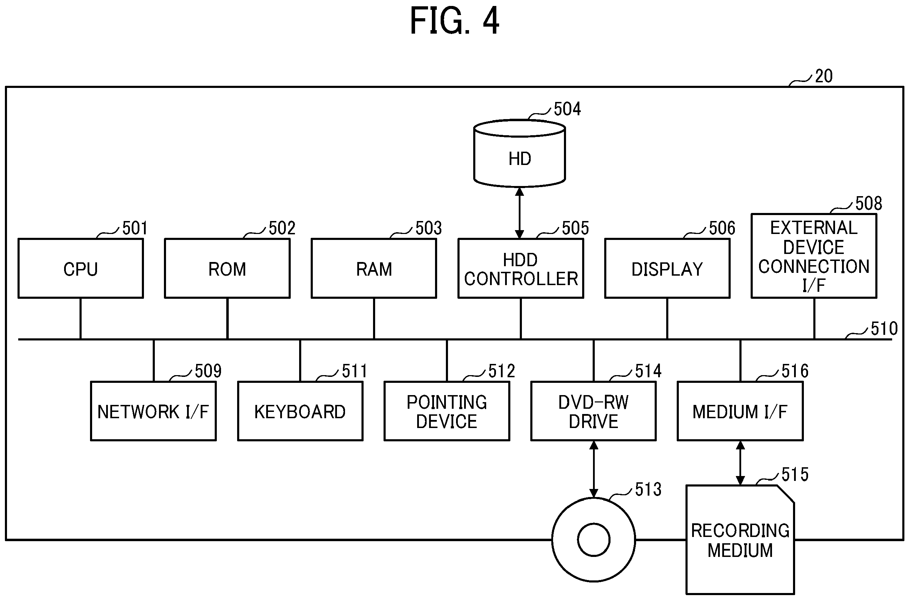

FIG. 4 is a hardware configuration diagram of the information processing system 20. As illustrated in FIG. 4, the information processing system 20 is a computer, and includes a CPU 501, a ROM 502, a RAM 503, a hard disk (HD) 504, a hard disk drive (HDD) controller 505, a display 506, an external device connection I/F 508, a network I/F 509, a bus line 510, a keyboard 511, a pointing device 512, a digital versatile disc-rewritable (DVD-RW) drive 514, and a medium I/F 516 as illustrated in FIG. 4.

The CPU 501 controls operations of the entire information processing system 20. The ROM 502 stores a program such as an IPL for driving the CPU 501. The RAM 503 is used as a work area for the CPU 501. The HD 504 stores various kinds of data such as a program. The HDD controller 505 controls reading or writing of various kinds of data from or to the HD 504 under control of the CPU 501. The display 506 displays various kinds of information such as a cursor, a menu, a window, text, or an image. The external device connection I/F 508 is an interface that connects various external devices to the information processing system 20. Examples of the external devices in this case include, but are not limited to, a Universal Serial Bus (USB) memory and a printer. The network I/F 509 is an interface for performing data communication via the networks N₁ and N₂. The bus line 510 is, for example, an address bus or a data bus for electrically connecting the components such as the CPU 501 illustrated in FIG. 4 to one another.

The keyboard 511 is an example of an input means including a plurality of keys with which a user inputs characters, numerals, or various instructions. The pointing device 512 is an example of an input means that allows a user to select or execute any of various instructions, select a target for processing, or move a cursor being displayed. The DVD-RW drive 514 controls reading or writing of various kinds of data from or to a DVD-RW 513, which is an example of a removable recording medium. In another example, an alternative to the DVD-RW may be a DVD-R or the like. The medium I/F 516 controls reading or writing (storing) of data from or to a recording medium 515 such as a flash memory.

### Image Forming Apparatus

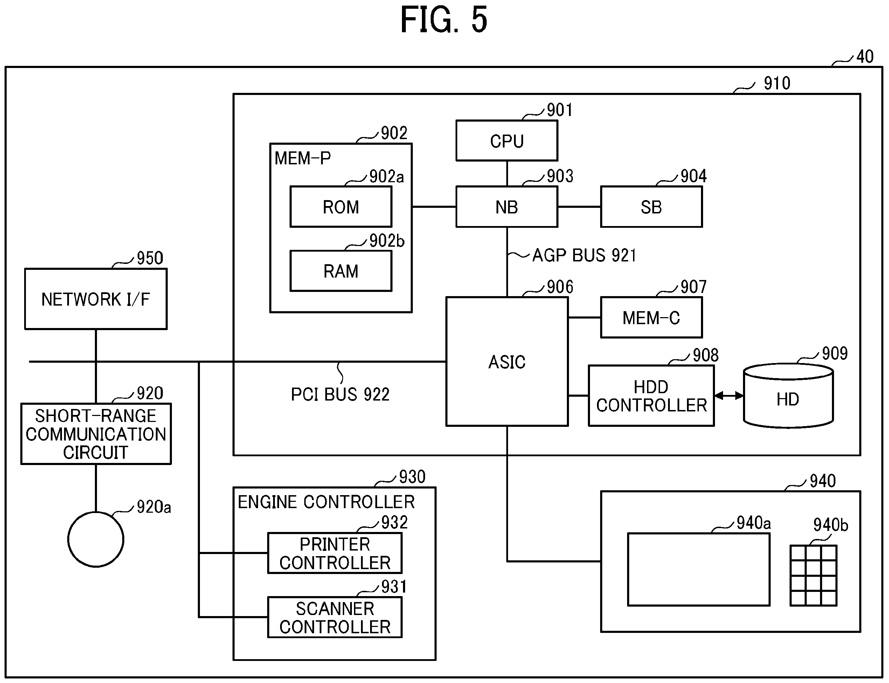

FIG. 5 is a hardware configuration diagram of the image forming apparatus 40. As illustrated in FIG. 5, the image forming apparatus 40 includes a controller 910, a short-range communication circuit 920, an engine controller 930, an operation panel 940, and a network I/F 950.

The controller 910 includes a CPU 901 as a main processor, a system memory (MEM-P) 902, a north bridge (NB) 903, a south bridge (SB) 904, an application specific integrated circuit (ASIC) 906, a local memory (MEM-C) 907 as a memory, a HDD controller 908, and an HD 909 as a memory. The NB 903 and the ASIC 906 are connected through an accelerated graphics port (AGP) bus 921.

The CPU 901 is a controller that controls the entire image forming apparatus 40. The NB 903 connects the CPU 901 to the MEM-P 902, the SB 904, and the AGP bus 921. The NB 903 includes a memory controller for controlling reading or writing of various kinds of data from or to the MEM-P 902, a Peripheral Component Interconnect (PCI) master, and an AGP target.

The MEM-P 902 includes a ROM 902a as a memory that stores a program and data for implementing various functions of the controller 910. The MEM-P 902 further includes a RAM 902b as a memory to which the program and data are loaded or as a rendering memory that stores data rendered for printing. The program stored in the RAM 902b may be stored in any computer-readable recording medium, such as a compact disc-read only memory (CD-ROM), compact disc-recordable (CD-R), or digital versatile disc (DVD), in an installable or executable file format for distribution.

The SB 904 connects the NB 903 to a PCI device or a peripheral device. The ASIC 906 is an IC dedicated to an image processing use and including hardware elements for image processing, and connects the AGP bus 921, a PCI bus 922, the HDD controller 908, and the MEM-C 907 to each other. The ASIC 906 includes a PCI target, an AGP master, an arbiter (ARB) as a central processor of the ASIC 906, a memory controller, a plurality of direct memory access controllers (DMACs), and a PCI unit. The memory controller controls the MEM-C 907. The DMACs perform rotation of image data with a hardware logic. The PCI unit transfers data to a scanner controller 931 and a printer controller 932 through the PCI bus 922. The ASIC 906 may include a USB interface or an Institute of Electrical and Electronics Engineers 1394 (IEEE1394) interface.

The MEM-C 907 is a local memory used as a buffer for image data to be copied or a code buffer. The HD 909 is a storage that stores image data, font data for printing, and form data. The HDD controller 908 controls reading or writing of data from or to the HD 909 under control of the CPU 901. The AGP bus 921 is a bus interface for a graphics accelerator card, which has been proposed to accelerate graphics processing. Through directly accessing the MEM-P 902 by high-throughput, the speed of the graphics accelerator card is improved.

The short-range communication circuit 920 is provided with a short-range communication circuit antenna 920a. The short-range communication circuit 920 is a communication circuit that is compliant with NFC, Bluetooth^{®}, or the like.

The engine controller 930 includes the scanner controller 931 and the printer controller 932. The operation panel 940 includes a panel display 940a and a hardware keypad 940b. The panel display 940a is implemented by, for example, a touch panel that displays current set values or a selection screen to receive an input from an operator. The hardware keypad 940b includes a numeric keys that receive set values of image forming conditions such as a density setting condition and a start key that receives an instruction for starting copying. The controller 910 controls the entire image forming apparatus 40 and controls, for example, rendering, communication, and input from the operation panel 940. The scanner controller 931 and the printer controller 932 each include an image processor for error diffusion or gamma conversion.

With an application switch key of the operation panel 940, the image forming apparatus 40 sequentially switch between a document box function, a copy function, a printer function, and a fax function to select one of the functions. When the document box function is selected, the image forming apparatus 40 enters a document box mode. When the copy function is selected, the image forming apparatus 40 enters a copy mode. When the printer function is selected, the image forming apparatus 40 enters a printer mode. When the fax function is selected, the image forming apparatus 40 enters a fax mode.

The network I/F 950 is an interface for performing data communication via the network N₂. The short-range communication circuit 920 and the network I/F 950 are electrically connected to the ASIC 906 through the PCI bus 922.

### Overview of Functions

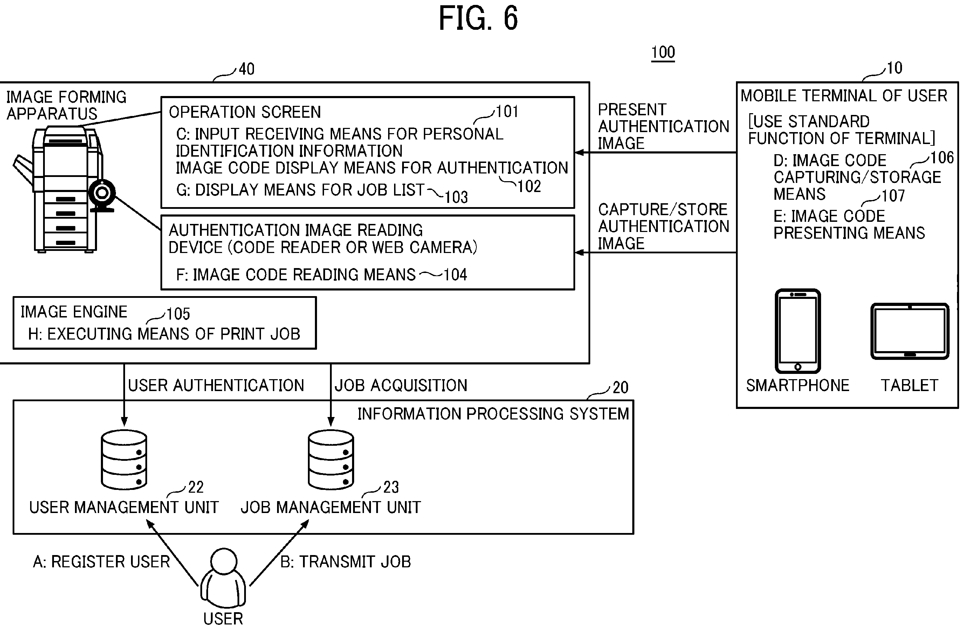

FIG. 6 is a diagram illustrating an overview of functions of the terminal apparatus 10, the image forming apparatus 40, and the information processing system 20 and relationships between the functions.
A. A user registers authentication information of the user in a user management unit 22 of the information processing system 20 in advance. When executing a job, the image forming apparatus 40 transmits the authentication information that is manually input by the user or input via an authentication image to the information processing system 20 to perform authentication of the user.
B. The user stores an electronic file to be printed by the image forming apparatus 40 in a job management unit 23 of the information processing system 20 in advance as a print job. The image forming apparatus 40 acquires the print job associated with identification information of the user from the information processing system 20 when executing the job. The functions of the user management unit 22 and the job management unit 23 are not necessarily installed in one information processing apparatus, and the functions may be deployed in different information processing apparatuses.
C. When executing pull printing, the image forming apparatus 40 receives a manual input of the authentication information from the user (input receiving means 101). If authentication is successful, the image forming apparatus 40 displays an authentication image to which the authentication information is encoded on the operation panel (image code display means 102). The authentication information may be manually input just for the first time.
D. The user uses the terminal apparatus 10 to capture the authentication image displayed by the image forming apparatus 40 and stores image data of the authentication image (image code capturing/storing means 106).
E. When the user performs printing based the print job registered in the information processing system 20 for the second time or later, the user displays image data of the authentication image on the terminal apparatus 10 (image code presenting means 107). The user presents the image data to the image forming apparatus 40.
D. The function E is implemented by a standard function of the terminal apparatus 10, and a dedicated application is not to be used. The user may use any application that implements capturing, storage, and presentation of the image in the terminal apparatus 10.
F. The image forming apparatus 40 reads the authentication image presented by the user (image code reading means 104). The reading device may be a device dedicated to the authentication image or a combination of an image-capturing function as a camera and software for decoding the authentication image. The reading device may be implemented in any manner as long as the authentication information is detected from image data of the authentication image. The reading device may be a scanner of the image forming apparatus 40.
G. If authentication using the authentication information is successful, the image forming apparatus 40 displays a print job list.
H. The image forming apparatus 40 executes the print job selected by the user from the print job list (executing means 105).

Note that the authentication information displayed by the image forming apparatus 40 may be encrypted. The image forming apparatus 40 performs encryption in advance at generation of the authentication image, and performs decryption at reading of the authentication image. Any specific method may be used for encryption and decryption.

Processing of a job, execution of the job, and execution of image formation (processing performed by a data processing unit described later) performed if authentication is successful are, for example, printing. However, the user may perform a scan with the image forming apparatus 40. Since the user is identified by authentication, the information processing system 20 stores, in association with the user ID of the user, image data generated by scanning an original and transmitted to the information processing system 20 by the image forming apparatus 40. Execution of a scan, transmission of scan data, or a registration request of the scan data may be performed by using data (for example, a personal scan setting, a storage destination setting, a transmission destination address information, or the like) acquired from the information processing system 20 by a data acquisition unit described alter. When the user causes the image forming apparatus 40 to print the image data, a copy service is also usable. The user may perform merely copying without leaving the image data in the information processing system 20.

A usage is also possible in which the print setting frequently used by the user is registered in the information processing system 20, and the frequently used print setting is automatically set (reproduced) in the image forming apparatus 40 in response to the user logging into the information processing system 20 via the image forming apparatus 40. If the user registers an address book of the user in the information processing system 20, the image forming apparatus 40 may transmit image data generated by scanning to an email address in the address book. The user selects the email address of the transmission destination from the address book downloaded by the image forming apparatus 40.

### Functions of Authentication System

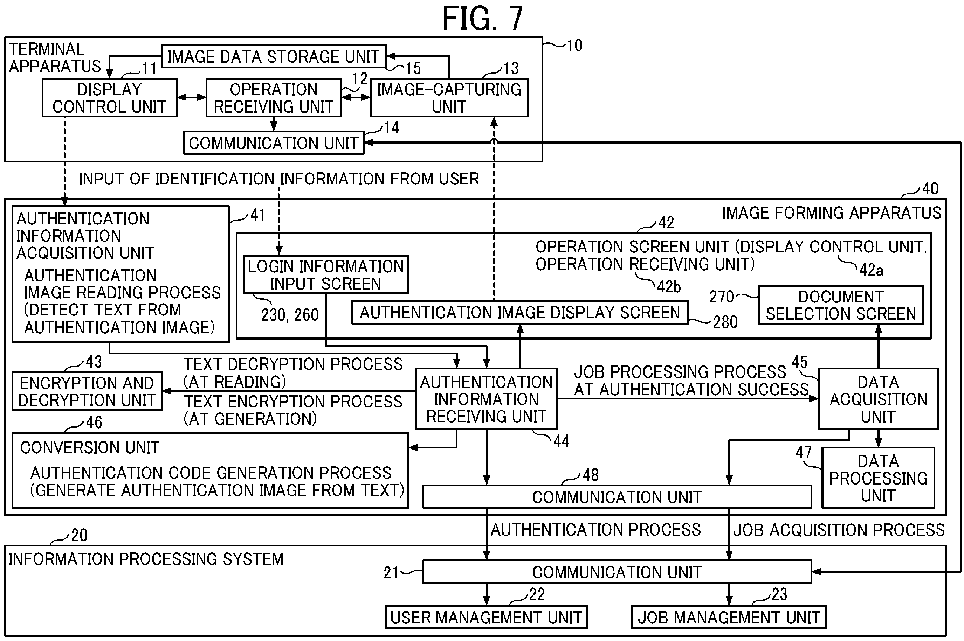

Functions provided by the authentication system 100 will be described with reference to FIG. 7. FIG. 7 is an example of a functional block diagram for describing, as individual blocks, functions of the terminal apparatus 10, the information processing system 20, and the image forming apparatus 40 of the authentication system 100.

### Functions of Terminal Apparatus

The terminal apparatus 10 includes a display control unit 11, an operation receiving unit 12, an image-capturing unit 13, a communication unit 14, and an image data storage unit 15. These functional units of the terminal apparatus 10 are functions or means implemented by any of the components illustrated in FIG. 3 operating in accordance with instructions from the CPU 401 based on a program (general-purpose application or web browser) loaded to the RAM 403 from the EEPROM 404.

The communication unit 14 is connected to the network N₁ and performs communication to register a print-target file in the information processing system 20. As described above, the communication unit 14 is connected to a public line (of 3G, 4G, LTE, or the like), a wireless LAN, or the like, and transmits the file to the information processing system 20. Note that the transmission is not limited to wireless transmission, and may be performed via a wired LAN or the like. Note that the file transmitted by the communication unit 14 serves as a print job in the information processing system 20. The print job is, for example, a combination of PDL-format print data converted from a file and a print setting. In the present embodiment, for ease of description, a file that is transmitted by the terminal apparatus 10 to the information processing system 20 may be referred to as a print job. The communication unit 14 may transmit the print job to the information processing system 20. The communication unit 14 can also receive a print job list from the information processing system 20.

The display control unit 11 generates a screen serving as a user interface (UI) and displays the screen on the display 418. Some of the functions of the display control unit 11 may be implemented by a web browser. The display control unit 11 displays the image data of the authentication image stored in the image data storage unit 15.

The operation receiving unit 12 receives various operations on the terminal apparatus 10. For example, the operation receiving unit 12 receives, from the user, an instruction to select a file to be registered as a print job, an instruction to display the image data of the authentication image, and so on.

The image-capturing unit 13 captures an authentication image of a user displayed by the image forming apparatus 40 and generates image data of the authentication image. The user may press a shutter, or the image-capturing unit 13 may recognize the authentication image and capture the authentication image without the user pressing the shutter.

The terminal apparatus 10 includes the image data storage unit 15 which is one or more of the EEPROM 404, the RAM 403, or the ROM 402 illustrated in FIG. 3. The image data storage unit 15 stores the image data of the authentication image captured by the image-capturing unit 13.

### Functions of Information Processing System

Functions of the information processing system 20 will be described. The information processing system 20 includes a communication unit 21, the user management unit 22, and the job management unit 23. These functional units of the information processing system 20 are functions or means implemented by any of the components illustrated in FIG. 4 operating in accordance with instructions from the CPU 501 based on a program loaded to the RAM 503 from the HD 504.

The communication unit 21 is connected to the network N₁ or N₂, and transmits and receives various kinds of data to and from the terminal apparatus 10 and the image forming apparatus 40. In the present embodiment, the communication unit 21 receives authentication information and a print job from the terminal apparatus 10. The communication unit 21 also receives authentication information from the image forming apparatus 40. If the authentication is successful, the communication unit 21 transmits a print job list or a print job to the image forming apparatus 40. Since the information processing system 20 is present in a data center or the like, the communication unit 21 is connected to a high-speed LAN or the like. Therefore, the communication unit 21 is not directly connected to the public line, and communicates with the terminal apparatus 10 via a gateway of a telephone company.

The user management unit 22 manages user information and performs a user authentication process. In the present embodiment, the user information is, for example, authentication information but may further include a name, an address, credit card information, or the like. The user management unit 22 determines that authentication is successful if a set of an email address and a password transmitted from the image forming apparatus 40 matches a set of an email address and a password registered in advance. Otherwise, the user management unit 22 determines that authentication is unsuccessful.

The job management unit 23 manages a print job in association with a user ID. In response to receiving, from the image forming apparatus 40, a request for a print job with a designated user ID (an authentication token in sequence diagrams described later, and either is identification information of the user), the job management unit 23 returns the print job associated with the user ID to the image forming apparatus 40.

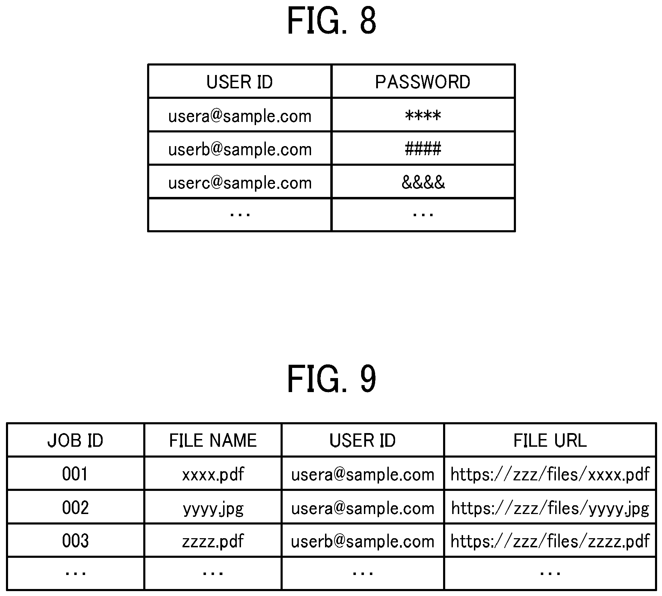

FIG. 8 schematically illustrates an example of the user information. The user information includes, for example, a user ID and a password of each user. Note that the term ID refers to a combination of a name, a code, a character string, a numeral, and the like used to uniquely distinguish a specific target from a plurality of targets. The ID may be referred to as identification information. In FIG. 8, the email address serves as the user ID. However, the user ID may be any information for identifying the user. The password is a character string that is confidential to anyone other than the user and is determined in advance to authenticate whether the user is an authorized user.

In the present embodiment, each user is an individual belonging to a tenant or a group of individuals. The term "tenant" refers to an organization (such as a corporation, a school, a local government, or an organization that is part of these organizations) or an individual who has a contract to receive a service from a provider of the service (pull printing in the present embodiment). Each user registers an email address in the tenant, connects the terminal apparatus 10 to a Uniform Resource Locator (URL) transmitted to the email address, and performs user registration of a password and the like.

FIG. 9 schematically illustrates print job information managed by the job management unit 23. The print job information includes items of a job ID, a file name, a user ID, and a file URL.
The job ID is assigned by the information processing system 20 to each print job without any overlap. The job ID may be assigned by the terminal apparatus 10.
The file name is a file name of a print-target file transmitted by the terminal apparatus 10. The user ID is user identification information for identifying a user.
The file URL indicates a location (address on the network) where the file is stored. The file URL may be a file path, or the file may be stored in the information processing system 20.

### Functions of Image Forming Apparatus

Functions of the image forming apparatus 40 will be described. The image forming apparatus 40 includes an authentication information acquisition unit 41, an operation screen unit 42, an encryption and decryption unit 43, an authentication information receiving unit 44, a data acquisition unit 45, a conversion unit 46, a data processing unit 47, and a communication unit 48. These functional units of the image forming apparatus 40 are functions or means implemented by any of the components illustrated in FIG. 5 operating in accordance with instructions from the CPU 901 based on a program loaded to the RAM 902b from the HD 909.

In the present embodiment, the program executed by the image forming apparatus 40 is a native app. However, the program executed by the image forming apparatus 40 may be a web app. A web app is an application that operates by cooperation of a program in a script language operating on the web browser and a program on a web server. On the other hand, a native app is an application that is not executed unless the application is installed in the image forming apparatus 40.

The authentication information acquisition unit 41 captures the image data of the authentication image presented by the terminal apparatus 10, and decrypts the authentication information included in the image data. Decryption may also be referred to as decoding or restoring.

The operation screen unit 42 includes a display control unit 42a and an operation receiving unit 42b. The display control unit 42a displays various screens (described later) on the operation panel 940. Examples of the screens include a login information input screen 230, an authentication image display screen 280, and a document selection screen 270. These are main screens, and other screens may also be displayed. The operation receiving unit 42b receives a user operation on the screen.

The authentication information receiving unit 44 receives the authentication information acquired by the authentication information acquisition unit 41 and the authentication information input to the login information input screen 230. When the authentication information is encrypted or set to be encrypted, the authentication information receiving unit 44 requests the encryption and decryption unit 43 to decrypt or encrypt the authentication information.

When the authentication information is set to be encrypted, the encryption and decryption unit 43 encrypts the authentication information input by the user. When the authentication information acquired by the authentication information acquisition unit 41 is encrypted, the encryption and decryption unit 43 decrypts the authentication information.

The conversion unit 46 converts the authentication information, which is input by the user and received by the authentication information receiving unit 44 via the login information input screen 230, into the authentication image (such processing is referred to as coding or encoding).

The data acquisition unit 45 acquires the print job list from the information processing system 20 in response to receipt of a notification that authentication of the user based on the authentication information is successful from the information processing system 20. The data acquisition unit 45 acquires a print job instructed by the user from the information processing system 20, and requests the data processing unit 47 to execute processing of data such as the print job. The data processing unit 47 processes the data acquired by the data acquisition unit 45. The processing of data includes processing of a job, setting processing, and processing of requesting an external apparatus to perform predetermined processing.

The communication unit 48 is connected to the network N₂, and transmits and receives various kinds of information to and from the information processing system 20. In the present embodiment, the communication unit 48 transmits the authentication information to the information processing system 20 together with an authentication request, and receives an authentication result (success or failure). The communication unit 48 also receives an authentication token in the case of success. The communication unit 48 transmits a request for a print job associated with the user ID to the information processing system 20, and receives the print job associated with the user ID from the information processing system 20.

Note that the communication unit 48 may communicate with the terminal apparatus 10 by short-range wireless communication such as a wireless LAN, Bluetooth^{®}, or IC card communication or through a cable. For example, when the image forming apparatus 40 receives an authentication success from the information processing system 20, the image forming apparatus 40 may directly receive the print job from the terminal apparatus 10. After the authentication is successful, the image forming apparatus 40 may acquire data (print job) to be processed from any apparatus.

### Screen Transition and Each Screen

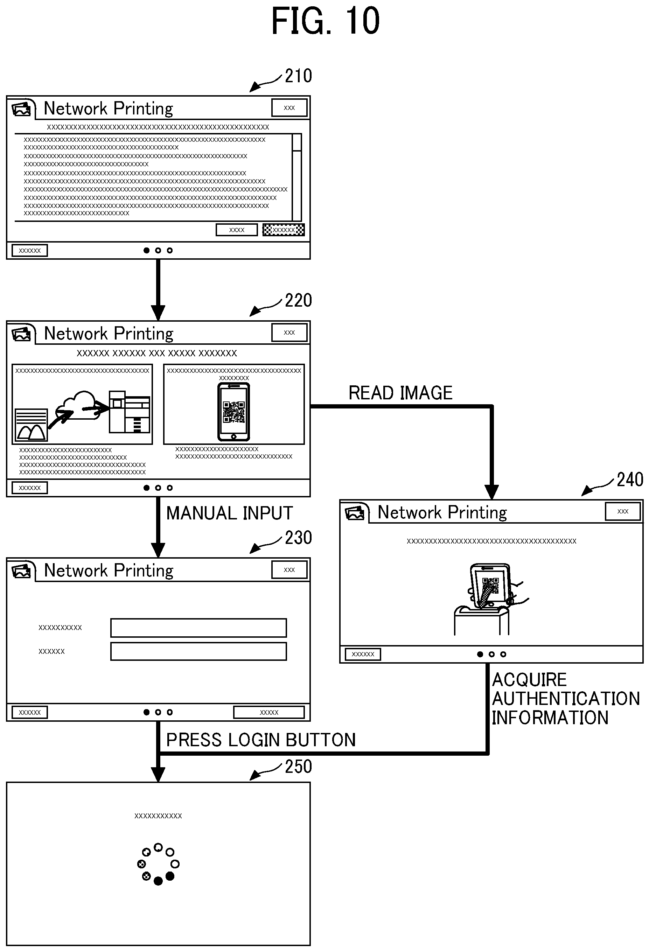

A transition of screens displayed by the image forming apparatus 40 and each of the screens will be described with reference to FIGs. 10 to 21. FIG. 10 illustrates a transition of screens displayed by the image forming apparatus 40 when a user logs into the information processing system 20 via the image forming apparatus 40. The image forming apparatus 40 displays a consent screen 210, a login method selection screen 220, the login information input screen 230, an authentication image reading screen 240, and a processing screen 250. As illustrated in FIG. 10, the consent screen 210 transitions to the login method selection screen 220, the login method selection screen 220 transitions to the login information input screen 230 or the authentication image reading screen 240, and the login information input screen 230 or the authentication image reading screen 240 transitions to the processing screen 250. The transition of the screens is merely an example.

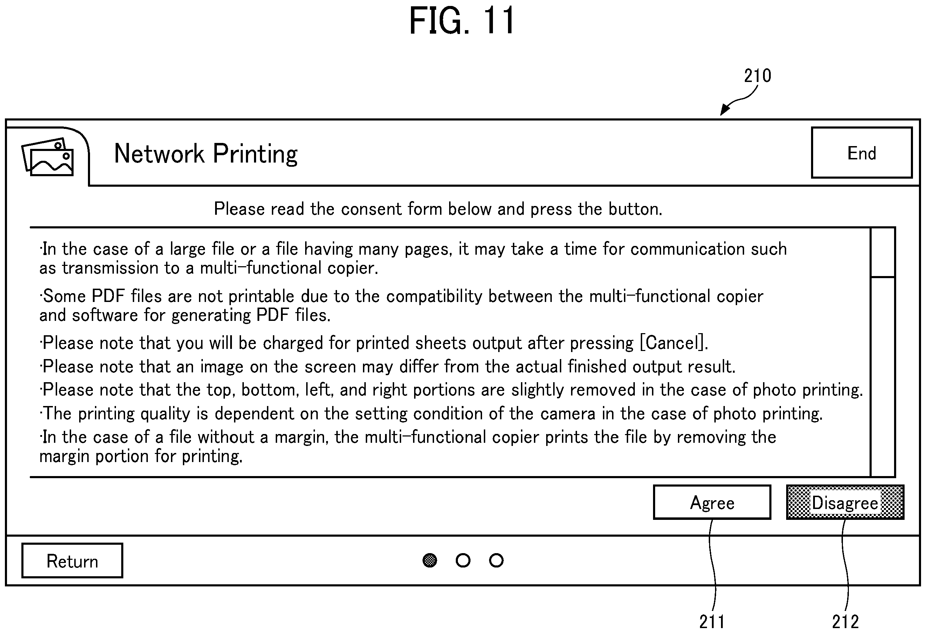

FIG. 11 illustrates the consent screen 210 displayed by the image forming apparatus 40. The consent screen 210 is a screen for receiving selection of whether to agree with notes related to printing. The consent screen 210 includes a disagree button 211 and an agree button 212. In response to the user pressing the agree button 212, the image forming apparatus 40 displays the login method selection screen 220. In response to the user pressing the disagree button 211, the image forming apparatus 40 ends the display of the consent screen 210 and returns the screen to the previous one.

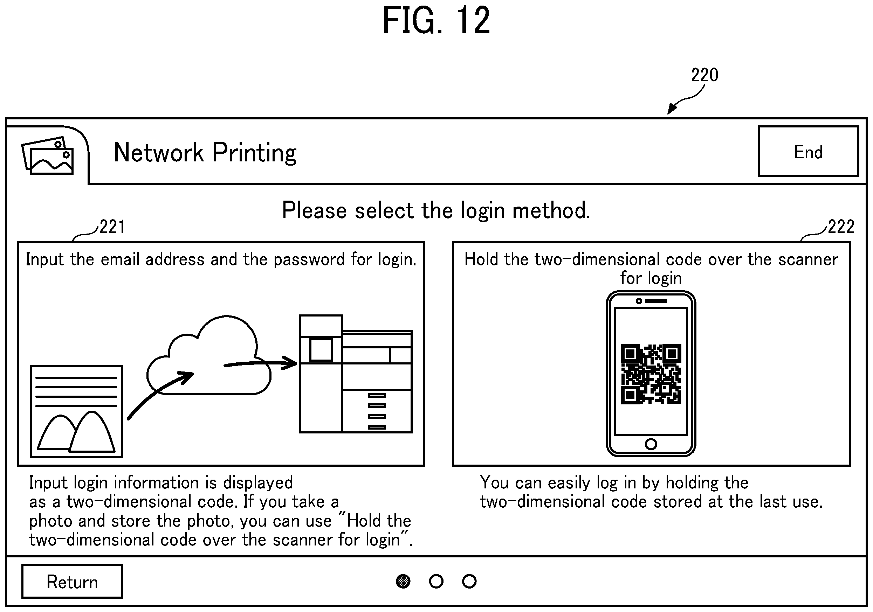

FIG. 12 illustrates the login method selection screen 220 displayed by the image forming apparatus 40. The login method selection screen 220 is a screen for receiving selection of whether the user inputs the authentication information for login or present the authentication image for login. The login method selection screen 220 includes a first button 221 and a second button 222. In response to the user pressing the first button 221, the image forming apparatus 40 displays the login information input screen 230. In response to the user pressing the second button 222, the image forming apparatus 40 displays the authentication image reading screen 240.
The operation screen unit 42 records which of the first button 221 and the second button 222 is pressed by the user. This is for the operation screen unit 42 to determine whether to display the authentication image display screen 280 described later.

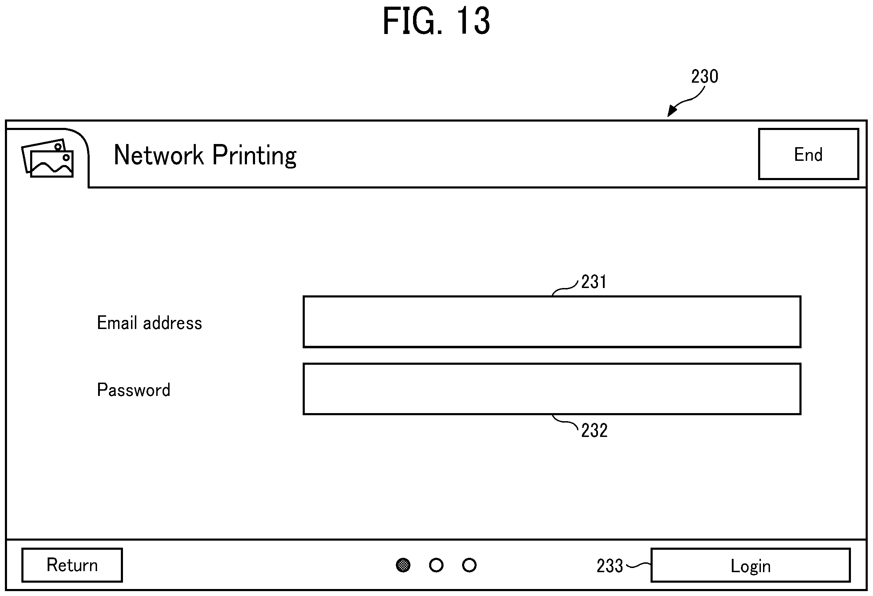

FIG. 13 illustrates the login information input screen 230 displayed by the image forming apparatus 40. The login information input screen 230 is a screen for receiving input of the authentication information input by the user. The login information input screen 230 includes an email address input field 231, a password input field 232, and a login button 233. In response to the user inputting the email address in the email address input field 231 and the password in the password input field 232, the login button 233 is enabled. In response to the user pressing the login button 233, the image forming apparatus 40 displays the processing screen 250.

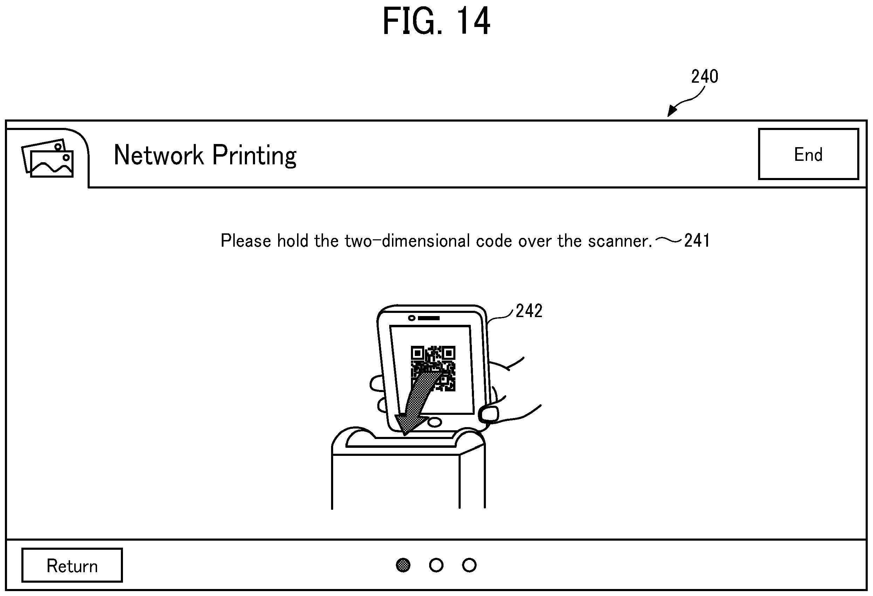

FIG. 14 illustrates the authentication image reading screen 240 displayed by the image forming apparatus 40. The authentication image reading screen 240 is a screen for prompting the user to present the authentication image and capturing the authentication image. The authentication image reading screen 240 includes a message 241 and an illustration 242 for prompting the user to present the authentication image. In response to the authentication information acquisition unit 41 successfully capturing the authentication image, the image forming apparatus 40 displays the processing screen 250. Successfully capturing the authentication image refers to successfully decrypting the authentication information. When the authentication information is an email address and a password, the authentication image may include information indicating the email address and the password. When the authentication result indicates a failure, the login information input screen 230 may be displayed instead of the authentication image reading screen 240.

There are three patterns below in which the authentication information acquisition unit 41 captures the authentication image.
·When the image forming apparatus 40 detects the approach of the user or the like with a proximity sensor, the authentication information acquisition unit 41 starts and repeats image-capturing. Note that the proximity sensor is a sensor that detects a reflection of an emitted radio wave, sound wave, light, or the like to detect the presence of a target and detects a distance to the target.
·The authentication information acquisition unit 41 repeats image-capturing all the time.
·The authentication information acquisition unit 41 repeats image-capturing while the image forming apparatus 40 displays the authentication image reading screen 240.

In the present embodiment, the authentication information acquisition unit 41 may capture the authentication image in any of these three patterns. The authentication information acquisition unit 41 discards the image-capturing result when the authentication image or the authentication information is not successfully detected from the image-capturing result.

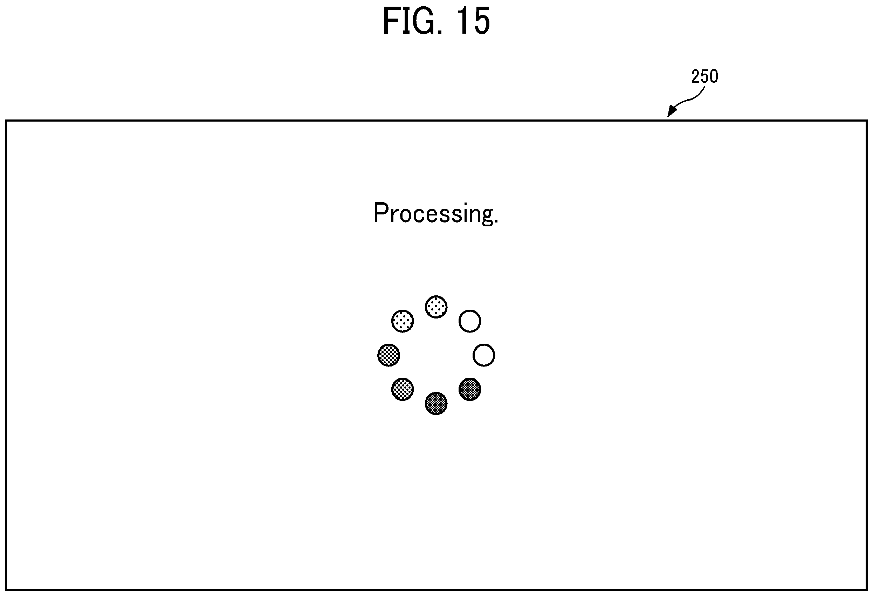

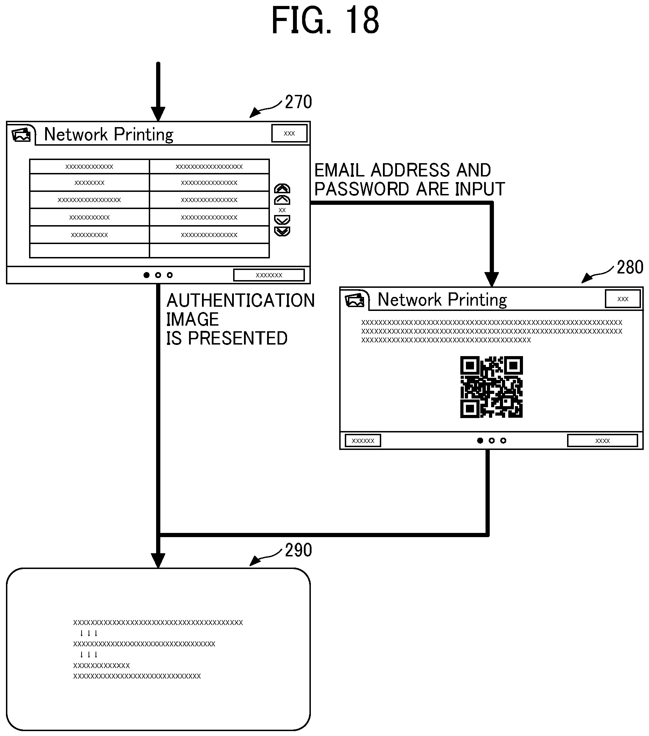

FIG. 15 is an example of the processing screen 250 displayed by the image forming apparatus 40. The processing screen 250 is a screen for displaying that the authentication process is underway. The processing screen 250 is displayed until the image forming apparatus 40 receives an authentication result from the information processing system 20 after transmitting an authentication request to the information processing system 20. In response to the image forming apparatus 40 receiving the authentication result (success), the screen transitions to the document selection screen 270 of FIG. 18. If the authentication result indicates a failure, the login information input screen 230 is displayed again.

### Variations

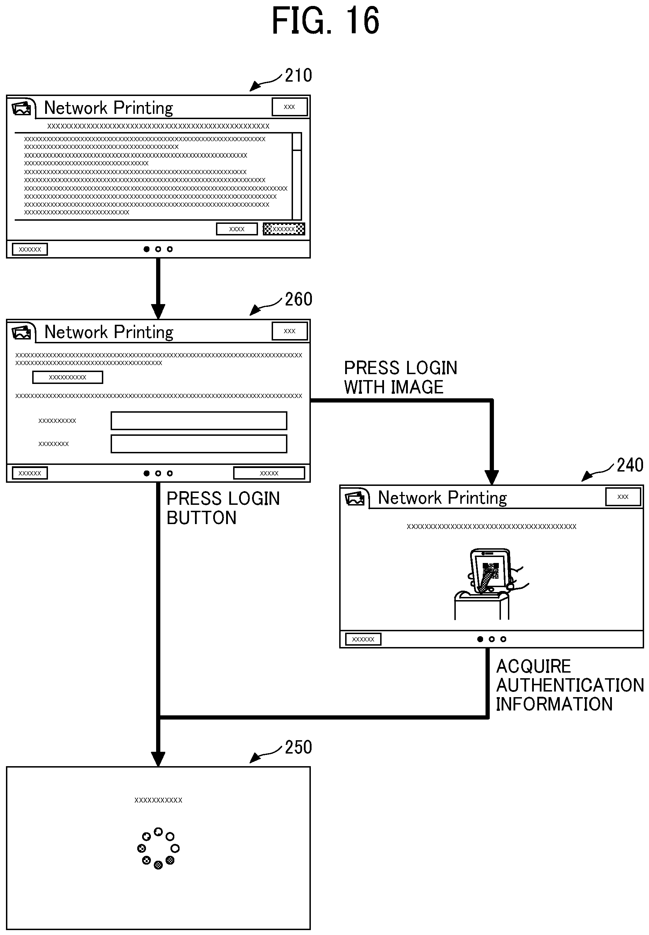

FIG. 16 is a variation of FIG. 10 and illustrates a transition of screens displayed by the image forming apparatus 40 when a user logs into the information processing system 20 via the image forming apparatus 40. The image forming apparatus 40 displays the consent screen 210, a login information input screen 260, the authentication image reading screen 240, and the processing screen 250. As illustrated in FIG. 16, the consent screen 210 transitions to the login information input screen 260, the login information input screen 260 transitions to the processing screen 250 or the authentication image reading screen 240, and the authentication image reading screen 240 transitions to the processing screen 250. Thus, the presence of the login information input screen 260 differs from FIG. 10.

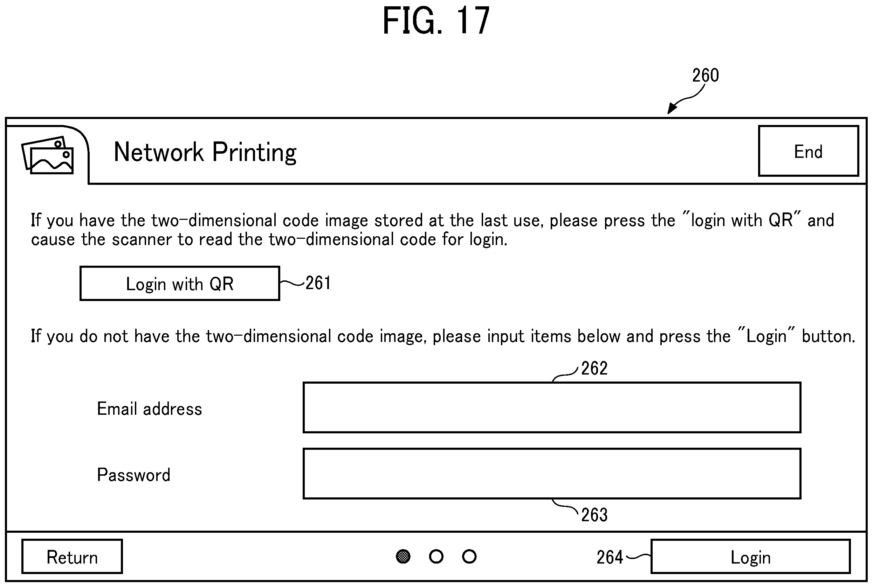

FIG. 17 illustrates the login information input screen 260 displayed by the image forming apparatus 40. The login information input screen 260 is a screen for receiving input of the authentication information input by the user. The login information input screen 260 includes an image login button 261, an email address input field 262, a password input field 263, and a login button 264. In response to the user pressing the image login button 261 (an example of a display component), the image forming apparatus 40 displays the authentication image reading screen 240. In response to the user inputting the email address in the email address input field 262 and the password in the password input field 263, the login button 264 is enabled. In response to the user pressing the login button 264, the image forming apparatus 40 displays the processing screen 250.

The operation screen unit 42 records which of the image login button 261 and the login button 264 is pressed by the user. This is for the operation screen unit 42 to determine whether to display the authentication image display screen 280 described later.

### Selection of Print Job and Printing based on Print Job

FIG. 18 illustrates a transition of screens on which the user selects a print job from the print job list displayed on the image forming apparatus 40 and causes the image forming apparatus 40 to perform printing. The image forming apparatus 40 displays the document selection screen 270, the authentication image display screen 280, and a print setting screen 290. As illustrated in FIG. 18, the document selection screen 270 transitions to the authentication image display screen 280 or the print setting screen 290, and the authentication image display screen 280 transitions to the print setting screen 290. The transition of the screens is merely an example.

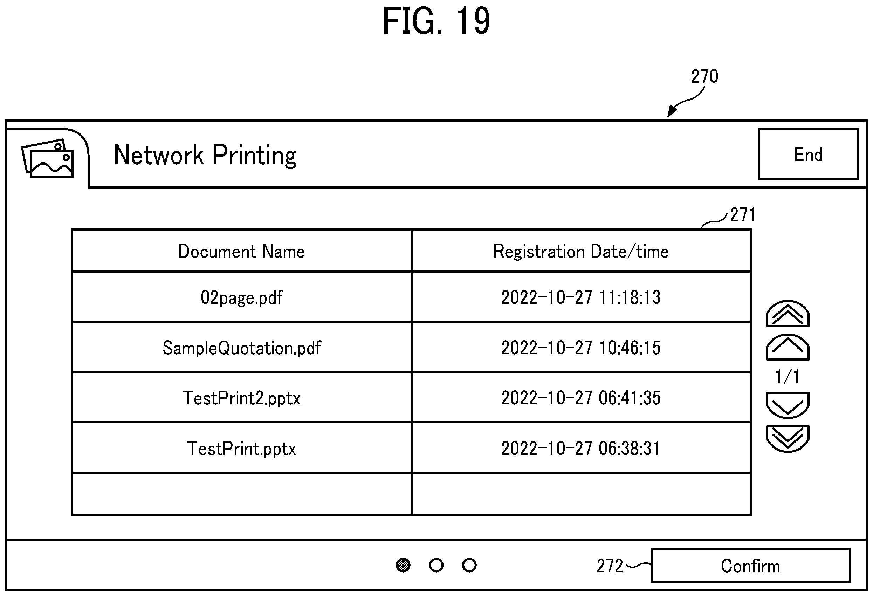

FIG. 19 illustrates the document selection screen 270 displayed by the image forming apparatus 40. The document selection screen 270 is a screen that displays the print job list acquired by the image forming apparatus 40 from the information processing system 20 and receives selection of a print job from the list by the user. The document selection screen 270 includes a print job list field 271 and a confirm button 272. In response to the user selecting a print job, the confirm button 272 is enabled. In response to the user pressing the confirm button 272, the image forming apparatus 40 displays the authentication image display screen 280 (in the case where the user inputs the authentication information for login) or the print setting screen 290 (in the case where the user presents the authentication image for login).

Whether the operation screen unit 42 displays the authentication image display screen 280 or the print setting screen 290 is switched depending on whether the user presses the first button 221 or the second button 222 on the login method selection screen 220 or depending on whether the user presses the image login button 261 or the login button 264 on the login information input screen 260.
If the user has not used the authentication image for login, the image forming apparatus 40 automatically displays the authentication image. This allows the user to capture the authentication image for the next login. If the user has used the authentication image for login, the image forming apparatus 40 does not display the authentication image. This save the user a troublesomeness.

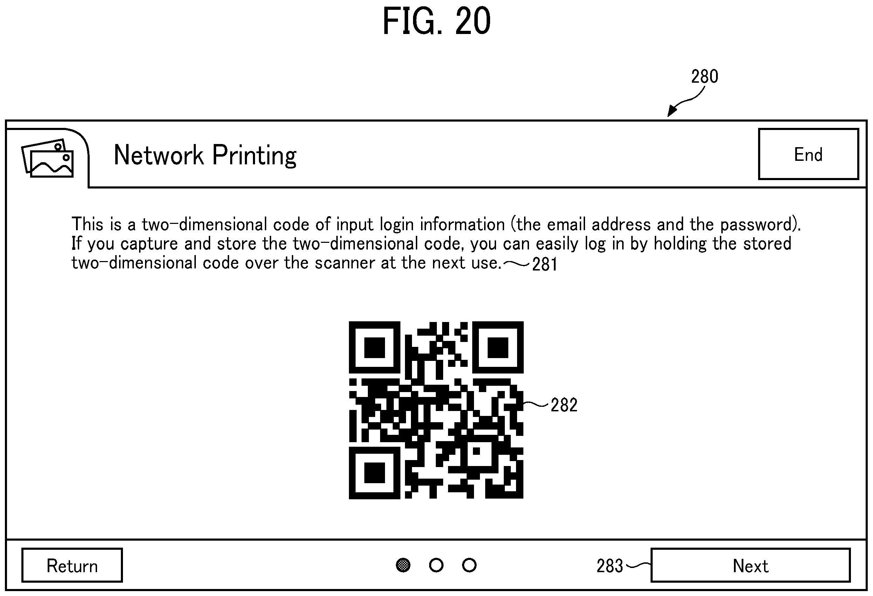

FIG. 20 illustrates the authentication image display screen 280 displayed by the image forming apparatus 40. The authentication image display screen 280 is a screen for displaying the authentication image generated by the image forming apparatus 40 from authentication information input by the user. The user captures the authentication image with the terminal apparatus 10. The authentication image display screen 280 includes an authentication image 282 and a message 281 for recommending capturing and storing of the authentication image 282. The message 281 is, for example, "This is a two-dimensional code of the input login information (the email address and the password). If you capture and store the two-dimensional code, you can easily log in by holding the stored two-dimensional code over the scanner at the next use."

To display the authentication image display screen 280, the image forming apparatus 40 or the information processing system 20 may transmit the authentication image to the email address of the user set as the destination or may email a URL that displays the authentication image to the user.

The authentication image 282 is coded authentication information (email address and password) of the user. In response to the user capturing an authentication image with the terminal apparatus 10 and pressing a next button 283, the image forming apparatus 40 displays the print setting screen 290.

Even in the case where the user logs in by presenting the authentication image, the image forming apparatus 40 may display the authentication image display screen 280 in response to an operation by the user or periodically. If the user captures the authentication image 282 and stores the authentication image 282 in the terminal apparatus 10, image data of the authentication image 282 is newly stored in the terminal apparatus 10. This makes it easier for the user to search for the image data of the authentication image 282.

In the case where the image forming apparatus 40 periodically displays the authentication image display screen 280, the type of the authentication image may be changed. The types of the authentication image include a QR code^{®}, PDF417^{®}, CODE49^{®}, Data Matrix^{®}, and VeriCode^{®}. The authentication information acquisition unit 41 decodes the authentication image to convert the authentication image into the authentication information, assuming that one of the types of the authentication image is valid for a certain period. For example, if the user presents a QR code^{®} including correct authentication information while the PDF417^{®} is valid, the authentication information acquisition unit 41 does not acquire the authentication information. This can suppress a decrease in security when the authentication image is leaked from the terminal apparatus 10. This process is easily implemented by the image forming apparatus 40 changing the type of the authentication image. Note that this change may be automatically performed by the image forming apparatus 40, or may be performed in response to a request from the information processing system 20.

If the user changes the email address registered in the information processing system 20, the user is not permitted to log in when the user presents the authentication image generated from the old email address. In this case, the image forming apparatus 40 displays the login information input screen 230 in response to an authentication failure. The image forming apparatus 40 displays the authentication image display screen 280 in response to an authentication success. This allows the user to update the image data of the authentication image 282 stored in the terminal apparatus 10.

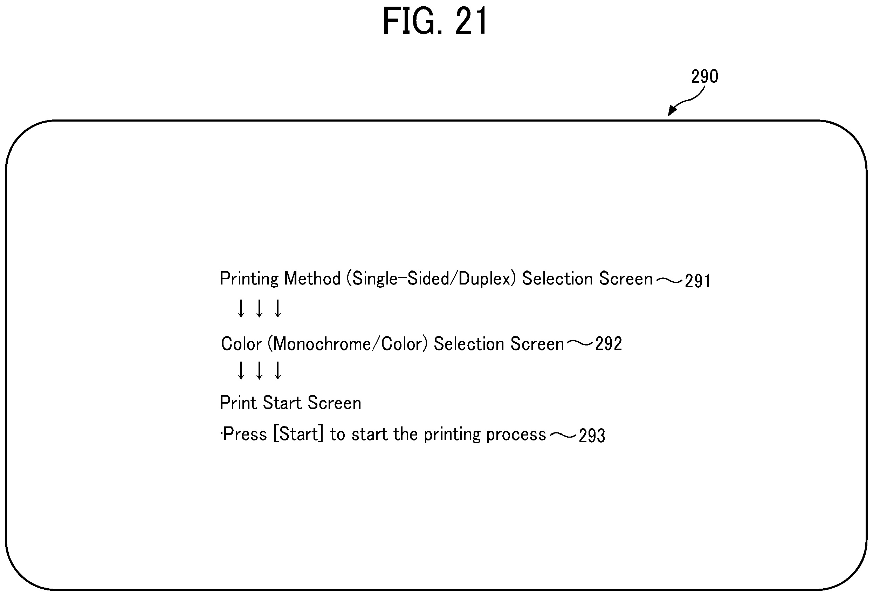

FIG. 21 schematically illustrates the print setting screen 290 displayed by the image forming apparatus 40. In practice, the print setting screen 290 further includes a plurality of screens for transition. The print setting screen 290 includes, for example, a printing method (single-sided/duplex) 291, a color setting 292, and a printing execution button 293.

In response to the user confirming a print condition on the print setting screen 290, the operation screen unit 42 displays a charge corresponding to the print setting. In response to the user paying the charge to a coin vendor by a credit card, electronic settlement, cash, or the like, the coin vendor transmits a payment completion signal to the image forming apparatus 40. In response to the image forming apparatus 40 receiving the payment completion signal, the data processing unit 47 executes (performs printing based on) the print job. The settlement of the charge is not limited to pre-payment, and may be post-payment. In the case of post-payment, in response to execution or completion of the print job, the image forming apparatus 40 registers the charge in the information processing system 20 in association with the user ID. The information processing system 20 charges the credit card company or the like immediately or at a predetermined timing.

### Operations or Processes

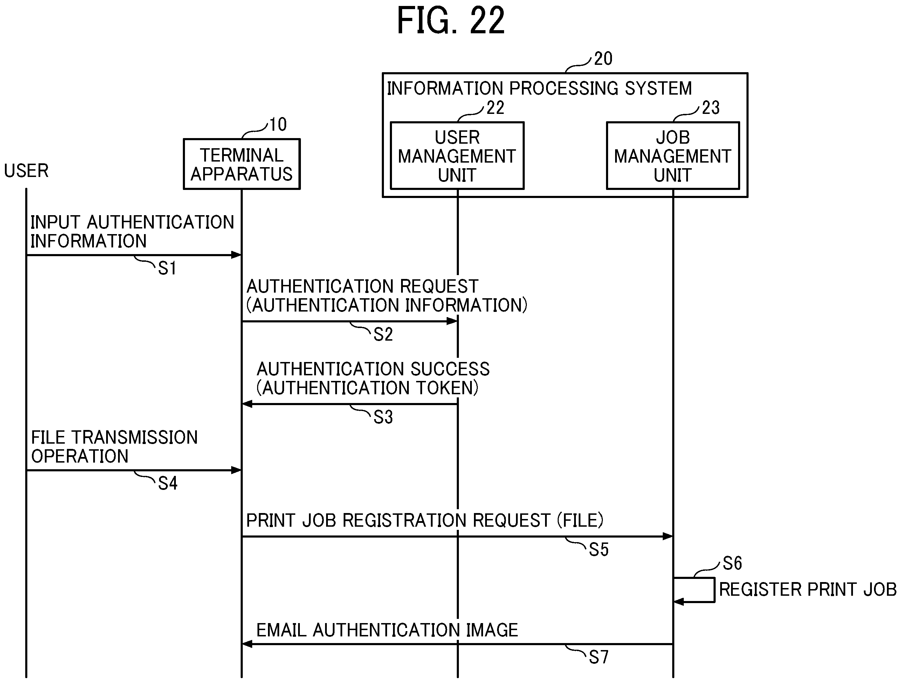

Operations or processes of the authentication system 100 will be described with reference to FIGs. 22 to 27.

FIG. 22 is a sequence diagram for describing a process in which a user operates the terminal apparatus 10 to store a print job in the information processing system 20.

S1: The user connects the terminal apparatus 10 to the information processing system 20 and causes a web browser to display a login screen. The user inputs the authentication information (an email address and a password) to start authentication. The operation receiving unit 12 receives the operation. The user may log in with biometric information such as a fingerprint.

S2: The communication unit 14 of the terminal apparatus 10 transmits an authentication request with the designated authentication information to the information processing system 20.

S3: The communication unit 21 of the information processing system 20 receives the authentication request, and the user management unit 22 authenticates the user based on the authentication information. Suppose that the authentication is successful. The communication unit 21 of the information processing system 20 transmits a notification indicating an authentication success and an authentication token to the terminal apparatus 10. Thereafter, the communication unit 14 of the terminal apparatus 10 communicates with the information processing system 20 (omitted in the sequence diagram) with the authentication token. The authentication token substitutes the identification information of the user. This is to reduce leakage of the user ID, and the communication unit 14 may attach the user ID to the communication.

S4: The user inputs, to the terminal apparatus 10, an operation of transmitting a file to be printed to the information processing system 20. The operation receiving unit 12 receives the operation.

S5: The communication unit 14 of the terminal apparatus 10 designates a file and transmits a registration request for a print job to the information processing system 20.

S6: The communication unit 21 of the information processing system 20 receives the request to register the file and the print job, and the job management unit 23 stores the print job in association with the user ID (associated with the authentication token).

S7: The job management unit 23 may generate an authentication image from the authentication information and transmit an email to the user. Alternatively, in response to the completion of the registration of the print job, the job management unit 23 may transmit the authentication image to the terminal apparatus 10 via the communication unit 21, and the terminal apparatus 10 may display the authentication image. The user stores the authentication image as a snapshot or a hard copy.
This allows the user to present the authentication image for login even if the user logs into the image forming apparatus 40 for the first time.

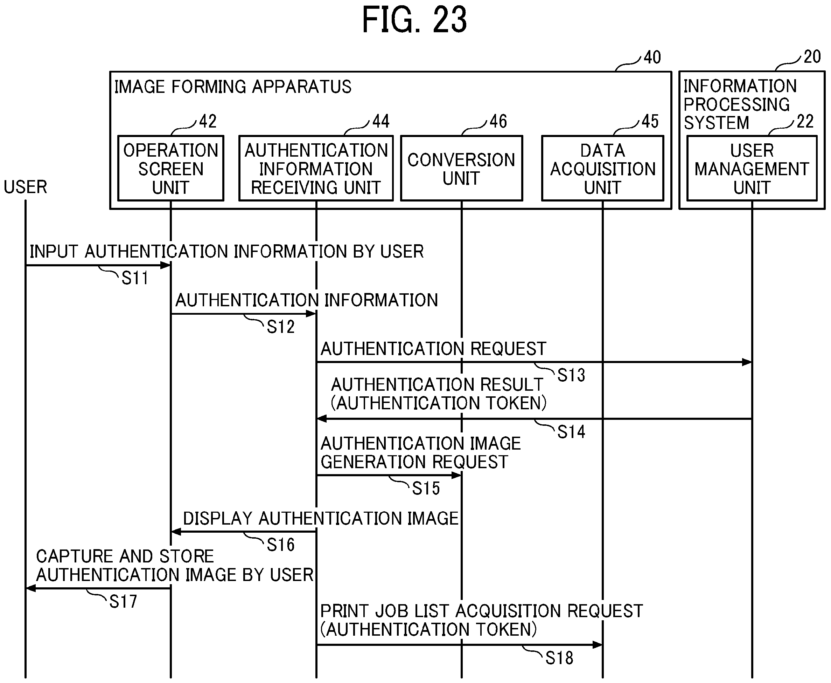

FIG. 23 is a sequence diagram for describing a process in which the user operates the image forming apparatus 40 to log into the information processing system 20 at first pull printing.

S11: The user presses the first button 221 on the login method selection screen 220. Thus, the operation screen unit 42 of the image forming apparatus 40 displays the login information input screen 230. The operation screen unit 42 may display the login information input screen 260. The user inputs the authentication information on the login information input screen 230. The operation screen unit 42 receives the input.

S12: The operation screen unit 42 sends the authentication information to the authentication information receiving unit 44.

S13: The authentication information receiving unit 44 transmits an authentication request with the designated authentication information to the information processing system 20 via the communication unit 48. The communication unit 21 of the information processing system 20 receives the authentication request, and the user management unit 22 performs authentication of the user based on the authentication information. It is assumed that the authentication is successful.

S14: The user management unit 22 of the information processing system 20 transmits an authentication result (success or failure) to the image forming apparatus 40 via the communication unit 21. If the authentication is successful, the user management unit 22 issues an authentication token associated with the user ID. Thereafter, the communication unit 14 of the terminal apparatus 10 communicates with the information processing system 20 with the authentication token.

S15: If the authentication is successful, the authentication information receiving unit 44 sends an authentication image generation request to the conversion unit 46 together with the authentication information. The conversion unit 46 converts the authentication information into the authentication image and sends the authentication image to the authentication information receiving unit 44.

S16: The authentication information receiving unit 44 sends an authentication image display request to the operation screen unit 42.

S17: Since the user has input the authentication information in step S11 (the user has pressed the first button 221 on the login method selection screen 220), the operation screen unit 42 displays the authentication image display screen 280 including the authentication image. This allows the user to capture, with the terminal apparatus 10, the authentication image to be used by the user for the subsequent logins. In the screen transition diagrams of FIGs. 10 and 18, the authentication image display screen 280 is displayed after the user selects a print job from the print job list. In FIG. 23, the authentication image display screen 280 is displayed in step S17 to make the description of the processing flow easier.

The image forming apparatus 40 can provide a user with a simple authentication means that save the user a troublesome operation of manually inputting authentication information at the subsequent times. The authentication information receiving unit 44 discards the authentication information and the authentication image in a period from a timing at which the display of the authentication image display screen 280 ends to a timing at which the user logs out. This can improve the security since the authentication information and the authentication image do not remain in the image forming apparatus 40.

S18: The authentication information receiving unit 44 sends the authentication token to the data acquisition unit 45 for printing. This allows the data acquisition unit 45 to acquire the print job list from the information processing system 20 using the authentication token. The data acquisition unit 45 acquires the print job list from the information processing system 20, and the operation screen unit 42 displays the document selection screen 270.

In the process of FIG. 23, the image forming apparatus 40 creates the authentication image from the authentication information. However, the information processing system 20 may create the authentication image and transmit the authentication image to the image forming apparatus 40. For example, when the image forming apparatus 40 and the information processing system 20 execute a web app, the information processing system 20 can create the authentication image and transmit the authentication image to the image forming apparatus 40 as a part of the screen.

### Login by Presentation of Authentication Image

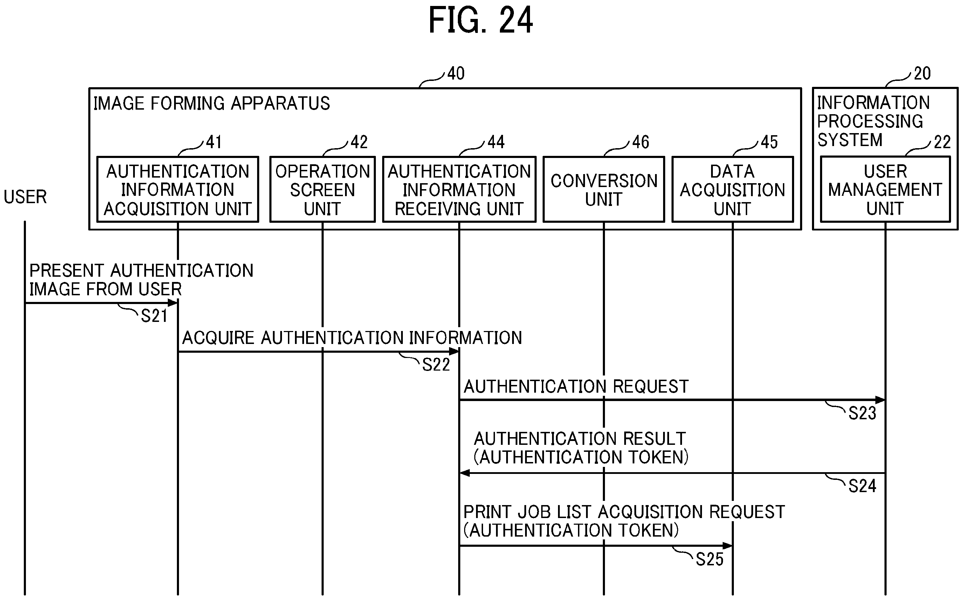

FIG. 24 is a sequence diagram for describing a process in which the user presents the authentication image to the image forming apparatus 40 to log into the information processing system 20.

S21: The user presses the second button 222 on the login method selection screen 220. Thus, the operation screen unit 42 displays the authentication image reading screen 240. The user causes the terminal apparatus 10 to display the image data of the authentication image stored in the image data storage unit 15 in accordance with the authentication image reading screen 240. The display control unit 11 of the terminal apparatus 10 displays the authentication image, and the user presents the authentication image displayed by the terminal apparatus 10 to the image forming apparatus 40. The image forming apparatus 40 has an opening of an optical system for reading an authentication image.

S22: The authentication information acquisition unit 41 of the image forming apparatus 40 captures the authentication image, and decodes the authentication image to extract the authentication information. The authentication information acquisition unit 41 sends the authentication information to the authentication information receiving unit 44.

S23: The authentication information receiving unit 44 transmits authentication request with the designated authentication information to the information processing system 20 via the communication unit 48. The communication unit 21 of the information processing system 20 receives the authentication request, and the user management unit 22 performs authentication of the user based on the authentication information. It is assumed that the authentication is successful.

S24: The user management unit 22 of the information processing system 20 transmits an authentication result (success or failure) to the image forming apparatus 40 via the communication unit 21. When the authentication is successful, the user management unit 22 also transmits an authentication token to the image forming apparatus 40 via the communication unit 21.

S25: The authentication information receiving unit 44 sends the authentication token to the data acquisition unit 45 for printing. This allows the data acquisition unit 45 to acquire the print job list from the information processing system 20 using the authentication token. The data acquisition unit 45 acquires the print job list from the information processing system 20, and the operation screen unit 42 displays the document selection screen 270.

With the authentication image stored in the terminal apparatus 10, the user can be authenticated by a simple operation.

### Execution of Print Job after Authentication Success

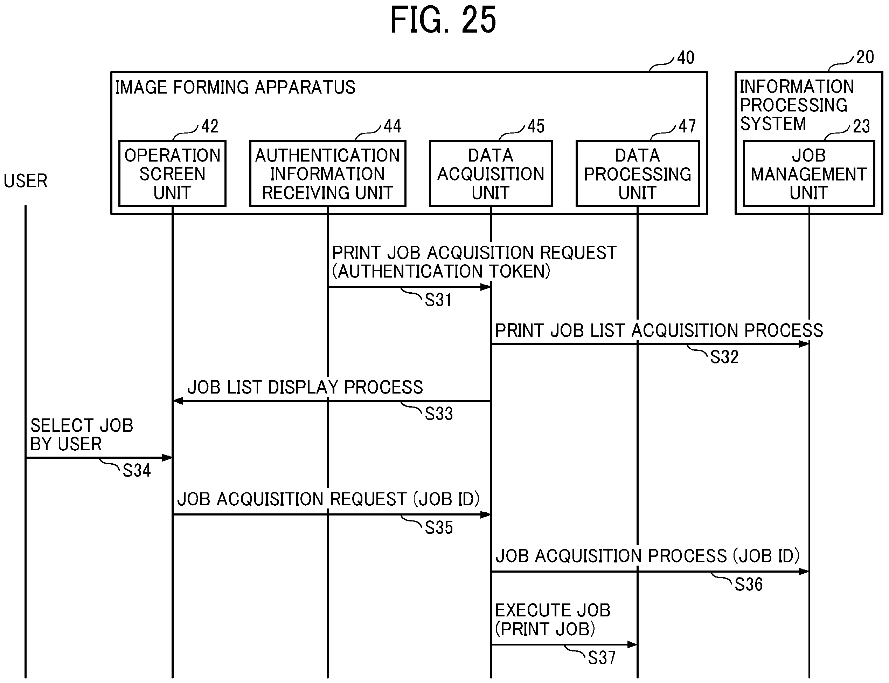

FIG. 25 is a sequence diagram for describing a process in which the image forming apparatus 40 executes a print job after the authentication success.

S31: As described above, the authentication token is sent from the authentication information receiving unit 44 to the data acquisition unit 45.

S32: The data acquisition unit 45 transmits the print job list with the designated authentication token to the information processing system 20 via the communication unit 48. The communication unit 21 of the information processing system 20 receives the request. The job management unit 23 identifies the user ID based on the authentication token, and acquires a print job list associated with the user ID. The job management unit 23 of the information processing system 20 transmits the print job list to the image forming apparatus 40 via the communication unit 21.

S33: The data acquisition unit 45 of the image forming apparatus 40 receives the print job list via the communication unit 48. The data acquisition unit 45 sends the print job list to the operation screen unit 42. The operation screen unit 42 displays the document selection screen 270 on the operation panel 940 using the print job list.

S34: The user selects (presses) a print job to be printed, and the operation screen unit 42 receives the selection.

S3 5: The operation screen unit 42 sends the job ID of the selected print job to the data acquisition unit 45. In the screen transition diagram of FIG. 18, if the user presses the first button 221 on the login method selection screen 220 in step S11 of FIG. 23, the operation screen unit 42 displays the authentication image display screen 280 in step S35. If the user presses the second button 222 on the login method selection screen 220 in step S21 of FIG. 24, the operation screen unit 42 does not display the authentication image display screen 280.

S36: The data acquisition unit 45 transmits a request for a print job with the designated job ID to the information processing system 20 via the communication unit 48. The communication unit 21 of the information processing system 20 receives the request for the print job with the designated job ID. The job management unit 23 acquires the print job associated with the job ID. The communication unit 21 of the information processing system 20 transmits the print job to the image forming apparatus 40.

S37: In response to acquiring the print job via the communication unit 48, the data acquisition unit 45 of the image forming apparatus 40 sends the print job to the data processing unit 47 together with a print instruction. The data processing unit 47 executes the print job (prints an image on a sheet) based on the print setting set by the user. After the execution of the print job, the data acquisition unit 45 may register the print setting set by the user in the information processing system 20. The information processing system 20 stores the print setting in association with the user ID.

This allows the image forming apparatus 40 to perform printing based on print jobs associated with the user. The user can confirm, select, and execute the print job registered by the user. In the present embodiment, printing is described as an example of the processing of a job. However, the processing of a job may be scanning or copying, and may include a print setting.

In FIG. 25, the image forming apparatus 40 acquires a print job from the information processing system 20. However, the user may insert a memory card to a memory card slot of the image forming apparatus 40, and the image forming apparatus 40 may acquire a file from the memory card and print the file.

The image forming apparatus 40 may acquire a print job from the terminal apparatus 10. If the image forming apparatus 40 and the terminal apparatus 10 are connected by wire, the terminal apparatus 10 transmits a file selected by the user from the list on the terminal apparatus 10 to the image forming apparatus 40 without using a dedicated application. Storing the print job in the information processing system 20 in advance, which is performed by user, is omitted.

### Encryption and Decryption of Authentication Information

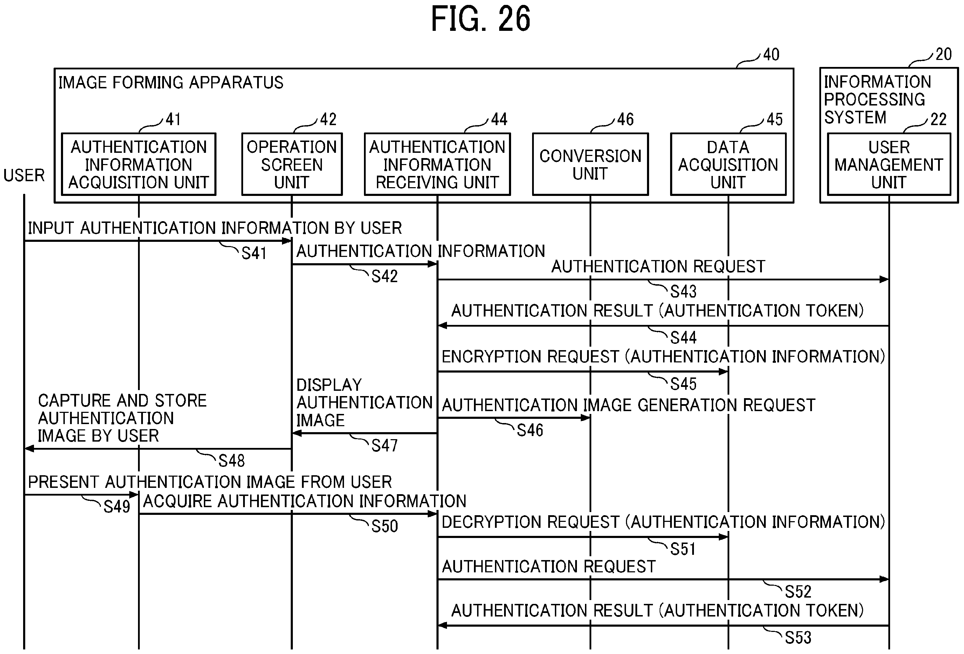

A login process in the case where the image forming apparatus 40 encrypts and decrypts the authentication information will be described with reference to FIG. 26. FIG. 26 is a sequence diagram for describing a process in which the user logs into the information processing system 20 via the image forming apparatus 40 in the case where the image forming apparatus 40 encrypts and decrypts the authentication information. In the description of FIG. 26, differences from FIG. 23 may be mainly described. In the description of FIG. 26, it is assumed that the image forming apparatus 40 is set to encrypt and decrypt the authentication information.

Step S41 which is not present in FIG. 23 is added to steps S45 to S48. S45: if the authentication is successful, the authentication information receiving unit 44 requests the encryption and decryption unit 43 to encrypt the authentication information input by the user. Thus, the authentication information receiving unit 44 acquires the encrypted authentication information. In steps S46 to S48, the encrypted authentication information is converted into the authentication image, and the user captures and stores this authentication image with the terminal apparatus 10.

S49: The user causes the terminal apparatus 10 to display the image data of the authentication image stored in the image data storage unit 15 in accordance with the authentication image reading screen 240. The display control unit 11 of the terminal apparatus 10 displays the authentication image, and the user presents the authentication image displayed by the terminal apparatus 10 to the image forming apparatus 40.

S50: The authentication information acquisition unit 41 of the image forming apparatus 40 captures the authentication image, and decodes the authentication image to extract the authentication information. The authentication information is encrypted. The authentication information acquisition unit 41 sends the authentication information to the authentication information receiving unit 44.

S51: The authentication information receiving unit 44 requests the encryption and decryption unit 43 to decrypt the authentication information. The encryption and decryption unit 43 decrypts the authentication information, and sends the authentication information to the authentication information receiving unit 44.

S52: The authentication information receiving unit 44 transmits an authentication request with the designated decrypted authentication information to the information processing system 20 via the communication unit 48. The communication unit 21 of the information processing system 20 receives the authentication request, and the user management unit 22 performs authentication of the user based on the authentication information. Suppose that the authentication is successful.

S53: The user management unit 22 of the information processing system 20 transmits an authentication result (success or failure) to the image forming apparatus 40 via the communication unit 21. When the authentication is successful, the user management unit 22 also transmits an authentication token to the image forming apparatus 40 via the communication unit 21.

Encryption of the authentication information allows secure authentication for the user to be performed in terms of security.

### Login Process when Login Method is Selected

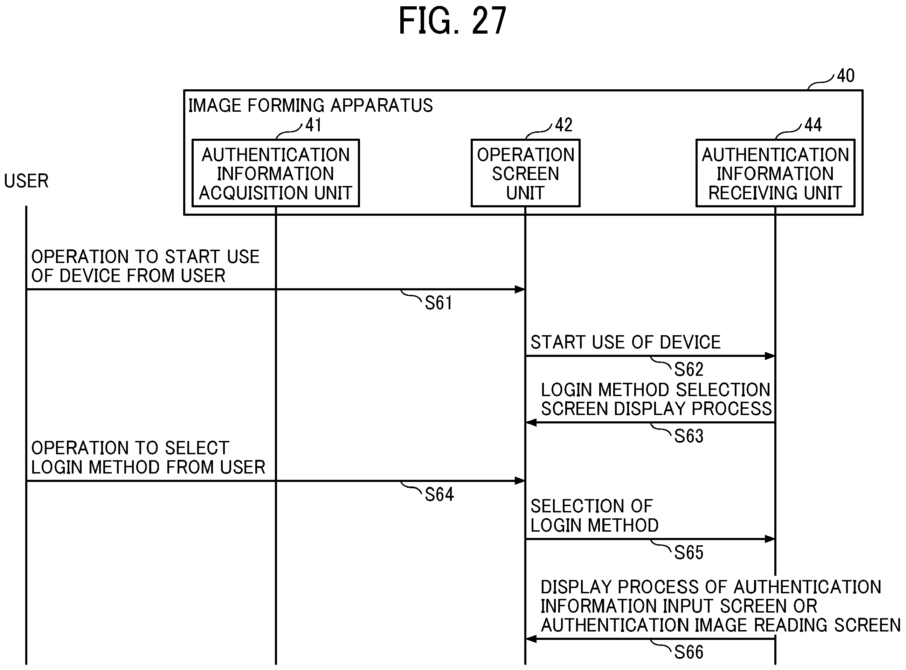

FIG. 27 is a sequence diagram illustrating a process performed by the authentication system 100 when the user switches the login method on the login method selection screen 220.

S61: The user performs an operation to start using the apparatus on the image forming apparatus 40. The operation screen unit 42 receives the operation.

S62: The operation screen unit 42 notifies the authentication information receiving unit 44 that the use of the apparatus is started.

S63: The authentication information receiving unit 44 sends a request to display the login method selection screen 220 to the operation screen unit 42. Suppose that the login method selection screen 220 has transitioned from the consent screen 210. The operation screen unit 42 displays the login method selection screen 220.

S64: The user presses the first button 221 or the second button 222 on the login method selection screen 220 to select the login method. The operation screen unit 42 receives the selection.

S65: The operation screen unit 42 sends the received login method to the authentication information receiving unit 44.

S66: The authentication information receiving unit 44 requests the operation screen unit 42 to display the login information input screen 230 or the authentication image reading screen 240 in accordance with which of input of the authentication information and presentation of the authentication image the user has selected. Thus, the operation screen unit 42 displays the login information input screen 230 or the authentication image reading screen 240.

Since the two login methods are selectable, the user can perform authentication in an easy-to-understand manner.

The authentication system 100 according to the present embodiment can implement easy authentication and easy printing based on the print job in response to the user presenting a photograph of the authentication image. The user may skip input of the authentication information at each printing. Since the terminal apparatus 10 having a camera function is used, installation of an application for printing by the user may be omitted. The image forming apparatus 40 can automatically switch whether to display the authentication image for imaging according to the login method selected by the user.

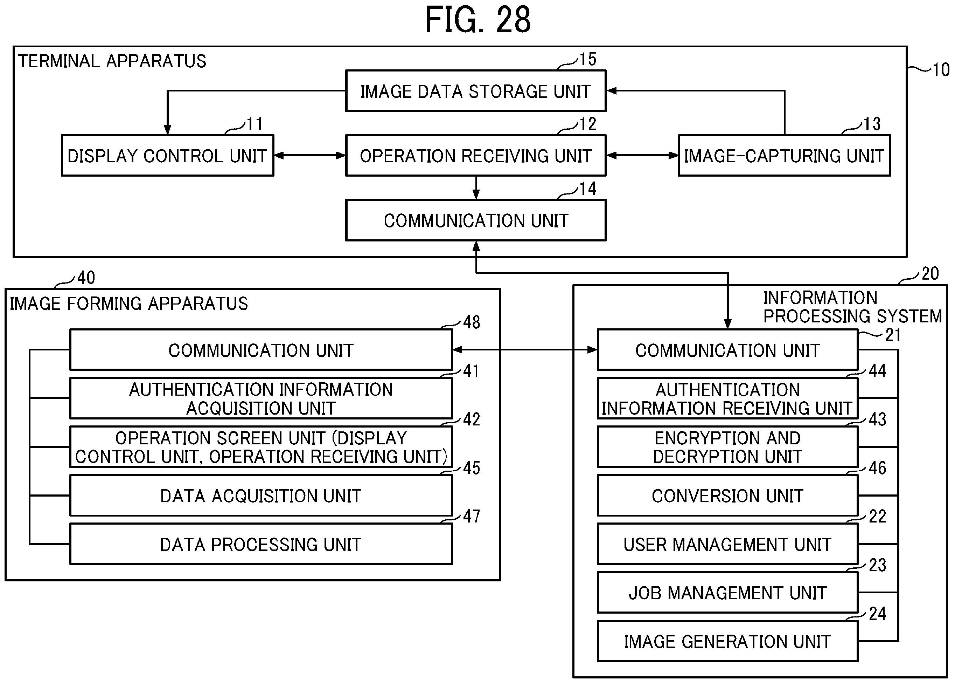

Case where Image Forming Apparatus Displays Various Screens by Web App The functional block diagram of FIG. 7 illustrates the case where the image forming apparatus 40 executes a native app. FIG. 28 is a functional block diagram in the case where the image forming apparatus 40 executes a web app. As illustrated in FIG. 28, the functions of the terminal apparatus 10 may be substantially the same as those in FIG. 7.

On the other hand, the image forming apparatus 40 includes the communication unit 48, the authentication information acquisition unit 41, the operation screen unit 42, the data acquisition unit 45, and the data processing unit 47. These functions may be substantially the same as those in FIG. 7. All the functions of the image forming apparatus 40 are not necessarily implemented by the web app.
For example, the communication unit 48 and the operation screen unit 42 may be implemented by a web app, and the data acquisition unit 45 and the data processing unit 47 may be implemented by a native app.

The information processing system 20 includes the communication unit 21, the authentication information receiving unit 44, the encryption and decryption unit 43, the conversion unit 46, the user management unit 22, the job management unit 23, and a screen generation unit 24. These functions may be substantially the same as those in FIG. 7. The screen generation unit 24 newly added generates screen information of a screen to be displayed by the image forming apparatus 40. The screen information is a program described in Hyper Text Markup Language (HTML), Extensible Markup Language (XML), a script language (for example, JavaScript^{®}), a Cascading Style Sheet (CSS), and the like. The structure of the web page is mainly specified by HTML, the operation of the web page is defined by the script language, and the style of the web page is specified by CSS.

The operation screen unit 42 of the image forming apparatus 40 is a web browser, and displays the screens of FIGs. 10 to 21 based on the screen information. That is, the image forming apparatus 40 provides a user interface to be operated by the user and execute a print job, and the information processing system 20 performs creation of a screen, generation of an authentication image, and the like.

As described above, the authentication method according to the present embodiment can be implemented in the similar manner regardless of whether the image forming apparatus 40 executes a native app or a web app.

### Other Applications

While the present disclosure has been described above using the embodiment, the embodiment does not limit the present disclosure in any way. Various modifications and replacements may be made within a scope not departing from the gist of the present disclosure.

For example, the terminal apparatus 10 may communicate with the information processing system 20 via a web browser, and the user may display an authentication image converted from authentication information thereof after login and present the authentication image to the image forming apparatus 40. The image forming apparatus 40 may capture this authentication image and authenticate the user. In this case, a dedicated application is not to be used in the terminal apparatus 10. The authentication image displayed by the terminal apparatus 10 may be an image transmitted by email when a print job is registered in the information processing system 20.

The apparatus may be a door lock system. The user presents the authentication image to a camera of the door lock system. The door lock system unlocks the door in response to successful authentication.
The door lock system registers a passage record (time, face photograph, etc.) of the user in the information processing system 20, and counts the elapsed time from the passage of the user through the door to the return of the user.

The operation of inputting the email address and the password to the image forming apparatus 40 by the user may be omitted or simplified. For example, the image forming apparatus 40 acquires biometric information such as a face image, a palm print, or a fingerprint of the user, and transmits an authentication request to the information processing system 20. If the authentication using the biometric information is successful, the information processing system 20 transmits the email address and the password of the user to the image forming apparatus 40. The image forming apparatus 40 can convert the authentication information into the authentication image and display the authentication image. The image forming apparatus 40 may perform authentication using an IC card carried by the user in addition to the biometric information.

The authentication image may be a two-dimensional code or a one-dimensional code such as a barcode. The two-dimensional code may be PDF417^{®}, CODE49^{®}, Data Matrix^{®}, VeriCode^{®}, or the like in addition to the QR code^{®}.

In the present embodiment, the information processing system 20 performs the authentication process. However, the image forming apparatus 40 may perform the authentication process. In this case, the image forming apparatus 40 may hold the authentication information.

In the present embodiment, the image forming apparatus 40 is used as the apparatus in the description. However, the apparatus is not limited to the image forming apparatus 40. The apparatus is, for example, a PJ (projector), an electronic whiteboard, a digital signage. etc.

The apparatus may be the image forming apparatus 40 and a PC that are connected to each other. In this case, the image forming apparatus 40 has a printing function, a scanning function, a copying function, and the like as the apparatus, and the PC displays the screens and communicates with the information processing system 20. The image forming apparatus 40 and the PC are communicably connected to each other via a cable or wirelessly.

In the configuration examples illustrated in FIG. 7 and the like, the terminal apparatus 10, the information processing system 20, and the image forming apparatus 40 are each divided in accordance with the major functions thereof to facilitate understanding of the processes performed by the terminal apparatus 10, the information processing system 20, and the image forming apparatus 40. No limitation is intended by how the functions are divided by process or by the name of the functions. The processes of the terminal apparatus 10, the information processing system 20, and the image forming apparatus 40 may be divided into more processing units in accordance with the processing content. The division may be performed so that one processing unit includes more processing.

The apparatuses or devices described in the embodiment are just one example of plural computing environments that implement the embodiment disclosed herein. In some embodiments, the information processing system 20 includes multiple computing devices, such as a server cluster. The multiple computing devices communicate with one another through any type of communication link including a network, shared memory, etc., and perform the processes disclosed herein.

The information processing system 20 may share the processing steps disclosed herein, for example, steps in FIG. 8 or the like in various combinations. For example, a process performed by a predetermined unit may be performed by multiple information processing apparatuses included in the information processing system 20. The functions of the information processing system 20 may be integrated into one server apparatus or divided into a plurality of apparatuses.

Each of the functions in the above-described embodiment may be implemented by one or more processing circuits or circuitry. Here, the "processing circuit" in the present specification includes a processor programmed to execute each function by software such as a processor implemented by an electronic circuit, and a device such as an application specific integrated circuit (ASIC), a digital signal processor (DSP), a field programmable gate array (FPGA), or a conventional circuit module designed to execute each function described above.

According to Aspect 1, an apparatus that processes data registered in an information processing system includes an operation receiving unit, a conversion unit, a display control unit, an authentication information acquisition unit, a data acquisition unit, and a data processing unit. The operation receiving unit receives input of authentication information of a user. The conversion unit converts the authentication information input by the user into an authentication image in response to a success of authentication using the authentication information of the user. The display control unit displays the converted authentication image obtained by the conversion unit. The authentication information acquisition unit acquires the authentication information of the user from the authentication image displayed on a terminal apparatus by the user. The data acquisition unit acquires the data associated with identification information of the user from the information processing system in response to a success of authentication using the authentication information acquired by the authentication information acquisition unit. The data processing unit performs processing of the data acquired by the data acquisition unit.

According to Aspect 2, in the apparatus of Aspect 1, the display control unit displays a screen for receiving selection of a login method that is either input of the authentication information of the user or presentation of the authentication image. The conversion unit (46) converts the authentication information input by the user into the authentication image in response to the operation receiving unit receiving selection of the login method that is input of the authentication information of the user and in response to a success of authentication using the authentication information input by the user. The display control unit displays the converted authentication image obtained by the conversion unit and to be captured by the terminal apparatus.

According to Aspect 3, in the apparatus of Aspect 2, in response to the operation receiving unit receiving the selection of the login method that is input of the authentication information of the user, the display control unit displays an input field for the authentication information of the user. In response to the operation receiving unit receiving the selection of the login method that is presentation of the authentication image, the display control portion displays a screen for prompting the user to present the authentication image.

According to Aspect 4, in the apparatus of Aspect 1, the display control unit displays a screen including an input field for the authentication information of the user and a display component for instructing login based on presentation of the authentication image. The operation receiving unit receives input of the authentication information of the user. The conversion unit converts the authentication information input by the user into the authentication image in response to a success of authentication using the authentication information of the user. The display control unit displays the converted authentication image obtained by the conversion unit and to be captured by the terminal apparatus.

According to Aspect 5, in the apparatus of Aspect 4, in response to the operation receiving unit receiving input of the authentication information of the user, the display control unit displays a screen indicating that an authentication process is underway. In response to the operation receiving unit receiving pressing of the display component, the display control unit displays a screen for prompting the user to present the authentication image.

According to Aspect 6, in the apparatus of any one of Aspects 2 to 5, the display control unit displays an indication for recommending capturing and storage of the converted authentication image at display of the converted authentication image obtained by the conversion unit.

According to Aspect 7, the apparatus of any one of Aspects 2 to 6 further includes an encryption and decryption unit. The encryption and decryption unit encrypts the authentication information input by the user. The conversion unit converts the authentication information encrypted by the encryption and decryption unit into the authentication image. The display control unit displays the converted authentication image obtained by the conversion unit.

According to Aspect 8, in the apparatus of any one of Aspects 1 to 7, the data acquisition unit acquires a list of the data associated with the identification information of the user from the information processing system in response to an authentication result of the user indicating a success. The display control unit displays the list of the data. The operation receiving unit receives selection of the data from the list of the data. The data acquisition unit acquires, from the information processing system, the data of which the selection is received by the operation receiving unit.

According to Aspect 9, in the apparatus of any one of Aspects 1 to 8, the processing of the data performed by the data processing unit includes printing of the data.

According to Aspect 10, in the apparatus of any one of Aspects 1 to 8, the processing of the data performed by the data processing unit includes processing of registering, in the information processing system, image data generated based on scanning of an original.

According to Aspect 11, in the apparatus of any one of Aspects 1 to 8, the processing of the data performed by the data processing unit includes processing of acquiring a print setting or a read setting associated with the identification information of the user from the information processing system and setting the print setting or the read setting in the apparatus.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An apparatus (40) communicably connected with a terminal apparatus (10) and an information processing system (20), comprising:
an operation receiving unit (42b) configured to receive input of authentication information of a user;
a conversion unit (46) configured to convert the authentication information input by the user into an authentication image based on a success of authentication using the authentication information of the user;
a display control unit (42a) configured to display the authentication image that is converted at the terminal apparatus (10);
an authentication information acquisition unit (41) configured to acquire the authentication information of the user from the authentication image displayed at the terminal apparatus (10);
a data acquisition unit (45) configured to acquire, from the information processing system (20), data associated with identification information of the user who is authenticated using the acquired authentication information; and
a data processing unit (47) configured to process the data that is acquired.

2. The apparatus (40) according to claim 1, wherein
the display control unit (42a) is configured to display a screen for receiving selection of login methods including a first login method in which the authentication information of the user is input and a second login method in which the authentication image is presented,
wherein in a case that the operation receiving unit (42b) receives the selection of the first login method and authentication using the authentication information input by the user is successful,
the conversion unit (46) is configured to convert the authentication information input by the user into the authentication image, and
the display control unit (42a) is configured to display the authentication image that is converted to be captured by the terminal apparatus.

3. The apparatus (40) according to claim 2, wherein
in a case that the operation receiving unit (42b) receives the selection of the first login method,
the display control unit (42a) is configured to display an input field for the authentication information of the user, and
in a case that the operation receiving unit (42b) receives the selection of the second login method,
the display control unit (42a) is configured to display a screen for prompting the user to present the authentication image.

4. The apparatus (40) according to claim 1, wherein
the display control unit (42a) is configured to display a screen including an input field for the authentication information of the user and a display component for instructing login based on presentation of the authentication image,
the operation receiving unit (42b) is configured to receive the input of the authentication information of the user via the input field, and
the authentication image displayed by the display control unit (42a) is to be captured by the terminal apparatus.

5. The apparatus (40) according to claim 4, wherein
in response to the operation receiving unit (42b) receiving input of the authentication information of the user,
the display control unit (42a) is configured to display a screen indicating that an authentication process is underway, and
in response to the operation receiving unit (42b) receiving pressing of the display component,
the display control unit (42a) is configured to display a screen for prompting the user to present the authentication image.

6. The apparatus (40) according to any one of claims 2 to 5, wherein the display control unit (42a) is configured to display an indication for recommending capturing and storage of the authentication image that is converted, when displaying the authentication image.

7. The apparatus (40) according to any one of claims 2 to 6, further comprising:
an encryption and decryption unit (43) configured to encrypt the authentication information input by the user, wherein
the conversion unit (46) is configured to convert the authentication information encrypted by the encryption and decryption unit (43) into the authentication image.

8. The apparatus (40) according to any one of claims 1 to 7, wherein
the data acquisition unit (45) is configured to acquire a list of the data associated with the identification information of the user from the information processing system based on the success of authentication of the user,
the display control unit (42a) is configured to display the list of the data,
the operation receiving unit (42b) is configured to receive selection of the data from the list of the data, and
the data acquisition unit (45) is configured to acquire, from the information processing system, the data of which the selection is received by the operation receiving unit.

9. The apparatus (40) according to any one of claims 1 to 8, wherein the processing of the data performed by the data processing unit (47) includes printing of the data.

10. The apparatus (40) according to any one of claims 1 to 8, wherein the processing of the data performed by the data processing unit (47) includes processing of registering, in the information processing system, image data generated based on scanning of an original.

11. The apparatus (40) according to any one of claims 1 to 8, wherein the processing of the data performed by the data processing unit (47) includes processing of setting, in the apparatus (40), a print setting or a read setting associated with the identification information of the user and acquired by the data acquisition unit (45).

12. An authentication system (100) comprising
the apparatus (40) according to any one of claims 1 to 11; and
an information processing system (20) configured to communicate with the apparatus (40), the information processing system (20) comprising a job management unit (23) that stores the data to be processed by the apparatus (40).

13. An authentication method performed by an apparatus (40) that processes data registered in an information processing system, the authentication method comprising:
receiving (S1, S2) input of authentication information of a user;
converting (S15) the authentication information input by the user into an authentication image based on a success of authentication using the authentication information of the user;
displaying (S16) the authentication image that is converted at a terminal apparatus (10);
acquiring (S21, S22) the authentication information of the user from the authentication image displayed at the terminal apparatus;
acquiring (S36), from an information processing system, data associated with identification information of the user who is authenticated using the acquired authentication information; and
processing (S37) the data that is acquired.

14. Carrier means carrying computer readable code for controlling a computer system to carry out the authentication method of claim 13.
